# FASCICULE DE BREVET EUROPEEN

(11) **EP 3 391 123 B1**
(45) Date de publication et mention de la délivrance du brevet: **29.04.2020**
(21) Numéro de dépôt: 16826091.7
(22) Date de dépôt: 13.12.2016
(51) Int. Cl.: G02B 27/01, B32B 17/10

(54) **PARE-BRISE FEUILLETÉ DE VÉHICULE AVEC SIGNALÉTIQUE LUMINEUSE INTERNE**
FAHRZEUGWINDSCHUTZSCHEIBE MIT INTERNER LEUCHTBESCHILDERUNG
VEHICLE WINDSHIELD WITH INTERNAL LIGHT-SIGNING

(30) Priorité: 14.12.2015 FR 1562333
(43) Date de publication de la demande: 24.10.2018
(73) Titulaire: Saint-Gobain Glass France, 92400 Courbevoie (FR)
(72) Inventeur: LALUET, Jean-Yves, 75019 Paris (FR); BAUERLE, Pascal, 80700 Roye (FR)
(74) Mandataire: Saint-Gobain Recherche
(86) Numéro de dépôt international: PCT/FR2016/053364
(87) Numéro de publication internationale: WO 2017/103425

(56) Documents cités:
- WO-A1-2013/093351
- WO-A1-2015/041106
- CN-U- 202 503 691
- FR-A1- 2 519 501
- US-A1- 2014 097 636

## Description

L'invention se rapporte au domaine des pare-brise feuilletés de véhicule incorporant une signalétique lumineuse, en particulier des pictogrammes lumineux.

Les pare-brises sont dotés désormais de système d'affichage d'informations visuelles pour l'aide à la conduite.
La demande WO2013/093351 propose ainsi un pare-brise feuilleté à informations lumineuses comportant :
- une première couche périphérique de masquage pour l'extérieur, opaque, en un émail noir, au contact de la face interne du premier vitrage le plus extérieur,
- une deuxième couche périphérique de masquage opaque pour l'intérieur, en un émail noir, au contact de la face interne du deuxième vitrage le plus intérieur, cette couche de masquage comprenant des ouvertures formant des pictogrammes,
- une couche uniforme d'un matériau dopé en espèces luminescentes choisies pour absorber un rayonnement lumineux produit par une source génératrice d'un rayonnement dans le domaine de l'UV, tel qu'un réseau de diodes électroluminescentes et pour réémettre un rayonnement lumineux dans le domaine du visible, ladite couche luminescente uniforme étant disposée dans le vitrage, entre les couches de masquages intérieur et extérieur.
Certes, cette solution proposée permet de déporter les informations dans une zone de bord du pare-brise, où le contraste reste suffisant pour que l'information soit visible uniquement depuis l'intérieur sans nécessiter l'utilisation de sources excitatrices de lumière cohérente, de forte puissance, ou complexes car dotés de systèmes de contrôle directionnel du faisceau.
Toutefois, l'emploi d'une source UV présente un risque d'un point de vue de la sécurité oculaire et rend compliqué le dispositif. Enfin, les particules luminescentes restent sensibles à la chaleur and au blanchissement. Ainsi, la maturité de cette technologie n'est pas encore acquise à ce jour.
La présente invention se propose de fournir un pare-brise feuilleté de véhicule à information lumineuse interne permettant de répondre à l'ensemble des problèmes mentionnés précédemment, tout en étant maitrisant son coût.
Plus précisément, la présente invention se rapporte à un pare-brise feuilleté de véhicule à signalétique lumineuse interne, comprenant:
- un premier vitrage, bombé, de préférence en verre minéral, éventuellement teinté, notamment gris ou vert, avec une première face principale dite F1 destinée à être coté extérieur du véhicule et une deuxième face principale opposée dite F2, vitrage d'épaisseur E1 de préférence d'au plus 2,5mm, même d'au plus 2mm - notamment 1,9mm, 1,8mm, 1,6mm et 1,4mm- ou même d'au plus1,3mm ou d'au plus 1mm,
- un deuxième vitrage, bombé (comme le premier vitrage), de préférence en verre minéral, avec une troisième face principale dite F3 et une quatrième face principale opposée dite F4 notamment destinée à être côté intérieur du véhicule, d'épaisseur E'1 de préférence inférieure à E1, même d'au plus 2, 2 mm ou d'au plus 2mm - notamment 1,9mm, 1,8mm, 1,6mm et 1,4mm- ou même d'au plus1,3mm ou d'au plus 1mm, l'épaisseur totale des vitrages E1+E'1 étant de préférence strictement inférieure à 4mm, même à 3,7mm, l'un au moins -et mieux les deux- des premier et deuxième vitrages étant en verre minéral, l'autre éventuellement en verre organique comme un polycarbonate
lesdites premier et deuxième vitrages étant reliés entre eux via les faces F2 et F3 par un intercalaire de feuilletage en matière polymérique thermoformable (clair, extraclair), de préférence thermoplastique, côté face F2, d'épaisseur (totale) E3 d'au plus 2,2mm mieux d'au plus 2mm, d'au plus 1,5mm ou même d'au plus 1mm, par exemple à partir de 1, 2 ou 3 feuillets, notamment en retrait du chant du deuxième vitrage (d'au plus 5mm ou même d'au plus 2mm ou d'au plus 1mm) et même en retrait du chant du premier vitrage-(d'au plus 5mm ou même d'au plus 2mm ou d'au plus 1mm), intercalaire comportant une première face principale de collage côté face F2 et une deuxième face principale de collage côté face F3,
- une première couche périphérique dite de masquage intérieur en un matériau opaque, qui est entre la deuxième face de collage et la face F3, notamment le long d'une bordure de la face F3, -notamment (directement) sur la face F3 voire (directement) sur la deuxième face de collage- ou qui est sur la face F4, notamment le long d'une bordure de la face F4, -notamment (directement) sur la face F4 voire (directement) sur la deuxième face de collage, ladite couche de masquage intérieur étant discontinue comprenant ainsi une ou des premières discontinuités, de préférence discontinuité(s) distante(s) du contour de la couche masquage intérieur (donc entourée(s) par une ou des zones pleines de couche masquage intérieur), la ou les premières discontinuités forment une première signalétique, en signe(s) et/ou lettre(s),
- une deuxième couche périphérique dite de masquage extérieur en matière opaque, entre la première face de collage et la face F2, en regard de la couche de masquage intérieur et de la ou les premières discontinuités, -donc le long d'une bordure de la face F2-,
- une première source de lumière apte à émettre un premier rayonnement pour la première signalétique

En outre, la première source de lumière est un premier dispositif à diode électroluminescente organique dit OLED, courbé (car flexible, souple) d'épaisseur E2 inférieure à E3 et de préférence subcentimétrique et même d'au plus 0,5mm et mieux d'au plus 0,35mm en particulier d'épaisseur sensiblement égale à un feuillet thermoplastique donc de 0,76mm, 0,38mm ou 0,17mm qui peut être troué pour loger le dispositif OLED sur un éventuel support.
Le premier dispositif OLED est apte à émettre un premier rayonnement (monochromatique ou polychromatique) dans le spectre visible illuminant (de manière directe) la première signalétique (et même apte à émettre un deuxième rayonnement distinct, par un pilotage).
Le premier dispositif OLED comporte de préférence un premier substrat (de préférence transparent) courbé (de préférence polymérique), de préférence côté face F3, porteur dans l'ordre suivant) d'une éventuelle sous couche mono ou multicouche (notamment minérale, en particulier barrière à l'humidité ou aux alcalins et/ou encore d'extraction de lumière etc) d'une électrode inférieure (la plus proche du substrat) de préférence transparente, un premier système électroluminescent organique, et une électrode dite supérieure (la plus loin du substrat) de préférence réfléchissante et éventuellement une surcouche comme une couche d'encapsulation (dépôt ou film par exemple polymérique par exemple adhésivé etc).
Le premier dispositif OLED est entre les faces F2 et F3, est apte à illuminer la première signalétique (par rétroéclairage), ainsi étant en regard de la première signalétique, et en regard de la couche de masquage intérieur, et de préférence apte à émettre de la lumière uniquement vers la première signalétique.
Utiliser un dispositif OLED plutôt qu'une source UV est plus sécurisant. En outre, sa présence entre les vitrages plutôt que de manière externe et espacé du pare-brise assure une meilleure intégration et facile l'installation. La technologie OLED, fiable, permet de bonnes performances de rétro éclairage (intensité, rendu des couleurs, stabilité) sans éblouir et est de faible épaisseur rendant possible le feuilletage.
La flexibilité de l'OLED souple permet d'épouser le bombage des vitrages.
Dans la présente demande, la dénomination signalétique est fondée sur une sémantique iconique et/ou langagière, c'est-à-dire utilisant des signes (chiffres, pictogrammes, logos, couleurs symboliques...) et/ou une lettre ou des mots. L'invention convient tout particulièrement à un pare-brise de forme rectangulaire définis par ses bords latéraux et longitudinaux et avec un encadrement périphérique opaque, comme un émail, en face F2 et en face F3 ou en F2 et F4.
La première signalétique et même une deuxième signalétique ou une pluralité de signalétiques chacune rétroéclairé par un dispositif OLED dédié peuvent être situées:
- le long du bord longitudinal inférieur (en position monté), en particulier côté conducteur, surtout pour celles choisis pour l'aide à la conduite (pictogrammes etc), nécessitant une réaction rapide du conducteur,
- alternativement ou cumulativement le long du bord longitudinal supérieur (en position monté) en particulier pour les pictogrammes choisis pour l'aide à la conduite ou d'informations sur l'état du véhicule
- alternativement ou cumulativement le long du bord latéral côté conducteur (en position monté) en particulier pour les pictogrammes choisis pour l'aide à la conduite ou d'informations sur l'état du véhicule
- alternativement ou cumulativement le long du bord latéral côté passager (en position monté) en particulier pour les pictogrammes le concernant.
La première signalétique peut être choisie parmi :
- une aide à la conduite de préférence sur le bord longitudinal inférieur
- un témoin d'état de fonctionnement de la voiture, de préférence sur le bord longitudinal inférieur, supérieur ou le bord latéral côté conducteur
- une information sur l'environnement extérieur: météo,... sur le bord longitudinal supérieur
- un témoin de connectivité au réseau de communication sur le bord latéral côté passager avant.
La première signalétique est de préférence formée dans une première zone pleine de la couche de masquage intérieur (aplat de préférence d'émail et sur la face F2). La première signalétique peut être à proximité d'une zone discontinue (décorative) de masquage intérieur adjacente à la première zone pleine, notamment sous forme d'un ensemble de motifs décoratifs (souvent subcentimétriques et espacés de 0,01 à 2cm), notamment en émail (le même émail que la zone pleine). Par exemple les motifs sont de taille diminuant en direction du milieu du clair de vitre et/ou plus espacés en direction du milieu du clair de vitre.
La couche de masquage intérieur peut être une bande le long d'une bordure du pare-brise. On peut souhaiter augmenter localement la largeur pour que le conducteur (ou copilote) voit mieux la première signalétique (sans trop devoir abaisser les yeux) Aussi, La couche de masquage intérieur peut être une bande (en émail, en face F3 ou F4), notamment longitudinale ou latérale côté conducteur (ou passager), de largeur L0 d'au plus 2, 5,10, 20cm ou 30cm, et dans la zone de la première signalétique de largeur L1>L0.
Le premier dispositif OLED peut être apte à émettre un premier rayonnement à l'instant t1 tel que rouge, vert, orange ou blanc et un deuxième rayonnement distinct à l'instant t2 - tel que rouge, vert, orange ou blanc- ceci en fonction de signaux de commande.

La première signalétique est de préférence inscrite dans un rectangle de dimension verticale ou hauteur H centimétrique, (de dimension horizontale dite largeur W), et en définissant un angle α entre le pare-brise et l'axe de vision du conducteur (ou passager), la première signalétique est caractérisée par une dimension verticale dite hauteur apparente H' et H est fixée par la formule on définit une dimension verticale dite hauteur apparente H' et H est fixée par la formule *H* = *H*'/sin(*α*)
Par exemple pour une signalétique de hauteur apparente H' (ciblée) à 2cm et un angle de 25° H est de 4,7cm. La correction par anamorphose peut donc être importante.
Par exemple, la première signalétique (pictogramme) peut être inscrite dans un carré ou un rectangle de H (ou mieux H') et de W (ou mieux W') de 1 à 10cm et mieux de 2 à 5cm.
Dans une moindre mesure, on peut également chercher à compenser l'effet de perspective en élargissant la base de la première signalétique d'un facteur (1+H'/(d tan(α))) par rapport à son sommet où d est la distance entre le conducteur (ou passager) et la première signalétique.
Le pare-brise peut comporter un filtre de couleur (par exemple rouge, vert, bleu, orange) entre le premier dispositif OLED notamment émettant dans le blanc et la première signalétique, en particulier entre le premier substrat transparent (côté opposé aux électrodes, donc côté face F3) pour un OLED à émission par l'arrière et la première signalétique, sur la face F4 ou côté face F3.
On peut également être l'employer avec une OLED de couleur dans le cas où son spectre d'émission ne permet pas d'atteindre directement des coordonnées colorimétriques données (telles que fixées dans une norme par exemple, ou demandées par le constructeur automobile). Par exemple, lorsque le spectre d'émission est trop large, le filtre coloré permet alors d'en couper au moins une partie.
Le filtre de couleur comporte de préférence une couche filtrante colorée qui est côté F3 notamment en contact de la face F3 :
- sur la face F3
- ou sur le premier dispositif OLED en particulier sur le premier substrat transparent (côté opposé aux électrodes, donc côté face F3) pour un OLED à émission par l'arrière
- ou sur un support commun (même un substrat commun), courbé, du premier dispositif OLED et d'un deuxième dispositif OLED apte à illuminer une deuxième signalétique, support transparent à l'avant du premier dispositif OLED de préférence à émission par l'arrière donc côté face F3.
Il est possible d'utiliser différents types de filtres (de constitution et de mode d'opération différents), lesquels agissent sur ou modifient de façon choisie, maitrisée et reproductible l'émission lumineuse du dispositif OLED (leur transmission lumineuse présente à cet effet une dispersion spectrale différente de celle de l'émission lumineuse du dispositif OLED). Ces filtres peuvent être des polymères transparents colorés, des verres colorés, la coloration se faisant par dépôt ou dans la masse, ou peuvent être des couches déposées sur les OLEDs ou l' intercalaire de feuilletage, etc. comme explicité ci-après.
Comme mentionné précédemment, on utilise de préférence un ou des filtres par absorption (cette absorption étant en particulier contrôlée par des composés organiques ou inorganiques ajoutés le cas échéant à une matrice en verre ou en plastique). Ce type de filtre peut par exemple être formé par dépôt d'un ou plusieurs colorants ou pigments minéraux ou organiques (éventuellement dissous ou dispersés dans un médium, en particulier tel qu'une résine de type silicone, époxy ou acrylique, une encre à séchage UV, ou une matrice minérale de type sol-gel) à la surface d'un élément porteur transparent comme le support commun (en face avant). Cet élément peut être un matériau verrier (verre sodocalcique, verre borosilicate, ou il peut s'agir de l'une des faces F3 ou F4 du deuxième vitrage même, de préférence la face F3, ou encore de la face d'émission du dispositif OLED même) ou plastique/polymère (feuille de polymère type polyéthylène téréphtalate, en particulier thermostabilisé, polycarbonate, acrylate, polyétheréthercétone (PEEK), etc., ou il peut s'agir d'une face de l'intercalaire de feuilletage même, ou encore de la face d'émission du dispositif OLED même), des exemples de ces filtres étant notamment les gélatines ou filtres polymères colorés commercialisés par les sociétés Lee Filters ou Rosco. De préférence, l'élément porteur est le deuxième vitrage même, l'OLED même, ou l'intercalaire de feuilletage situé entre le dispositif OLED et le deuxième vitrage même. Le dépôt peut être réalisé par sérigraphie, par impression jet d'encre ou laser, par spray, par trempage, par application au rouleau, etc, et est de préférence réalisé par sérigraphie ou impression jet d'encre, en particulier sur le deuxième vitrage et/ou le dispositif OLED (et/ou éventuellement un élément intermédiaire tel qu'un intercalaire de feuilletage), notamment et avantageusement par jet d'encre.
A noter que les substances colorées, en particulier colorants ou pigments, utilisées pour réaliser les filtres précités résistent de préférence à la chaleur. Par exemple on peut utiliser avantageusement des pigments de phtalocyanine de cuivre polychlorés ou non, utilisés en mélange et dispersés dans une résine notamment de type polysiloxane réticulable, le mélange étant par exemple (et avantageusement) appliqué en particulier par sérigraphie. Dans le cas de l'impression jet d'encre, les encres utilisées peuvent être notamment des encres à séchage UV, stables en température et à la lumière, comme par exemple les encres de référence Anapurna M commercialisées par la société Agfa.

Le filtre par absorption permet avantageusement d'obtenir l'effet ou la couleur choisi(e) quel que soit l'angle d'incidence de l'observation.
Dans un autre mode de réalisation, on utilise un ou des filtres agissant par réflexion lumineuse (Cette réflexion étant en particulier contrôlée par des interférences se produisant au sein d'un empilement de couches minces constituées de différents matériaux, une couche mince étant une couche dont l'épaisseur est inférieure à la longueur d'onde de la lumière), notamment des filtres de type dichroïques, à base d'empilements (de couches) interférentiels semi-réfléchissants, etc. De tels filtres sont réalisés par exemple par dépôt (sous vide) physique en phase vapeur (PVD) (pulvérisation, pulvérisation assistée magnétron, évaporation) ou chimique en phase vapeur (CVD) de couches de haut et de bas indices de réfraction en alternance, le substrat sur lequel le dépôt est effectué pouvant être un matériau verrier ou un polymère.
Le filtre par réflexion permet d'obtenir l'effet ou la couleur choisi(e) dans l'axe de vision du conducteur, la perception pouvant cependant le cas échéant être différente à une autre incidence.
La couche de masquage intérieur peut être en face F3, la ou les premières ouvertures sont remplies par une couche transparente notamment en la matière thermoformable (thermoplastique, PVB de préférence) ou une couche filtrante colorée.
Le premier dispositif OLED comprend de préférence dans cet ordre :
- un (premier) substrat (préférence diélectrique, de préférence transparent : film plastique ou de verre) de préférence côté face F3
- éventuellement une ou des couches fonctionnelles :
   - couche barrière à l'humidité (si substrat plastique) ou couche barrière aux alcalins (si substrat verre)
   - et /ou couche d'extraction de lumière : couche diffusante , par exemple émail ou autre liant minéral (sol-gel etc) ou organique avec particules diffusantes si substrat verrier ou liant organique (résine) ou minéral (sol gel) avec particules diffusantes si substrat plastique,
- une électrode inférieure (anode), de préférence transparente
- un premier système électroluminescent organique (plusieurs émetteurs de différentes couleurs peuvent être empilés),
- une électrode supérieure de préférence réfléchissante
- et éventuellement une première surcouche comme une couche d'encapsulation (dépôt ou film par exemple polymérique par exemple adhésivé à l'électrode supérieure etc).
La surcouche peut être en contact avec l 'intercalaire de feuilletage (notamment PVB).

SI on utilise un deuxième dispositif OLED entre les faces F2 et F3 (ou plus encore d'OLED) il peut aussi avoir la même structure notamment il peut comprendre
- un substrat de préférence côté face F3 (préférence diélectrique, notamment transparent : film plastique ou de verre), qui est soit le premier substrat (substrat commun) soit un deuxième substrat distinct (adjacent)
- éventuellement une ou des couches fonctionnelles :
   - couche barrière à l'humidité (si substrat plastique) ou couche barrière aux alcalins (si substrat verre)
   - et /ou couche d'extraction de lumière : couche diffusante, par exemple émail ou autre liant minéral (sol-gel etc) ou organique avec particules diffusantes si substrat verrier ou liant organique (résine) ou minéral (sol gel) avec particules diffusantes si substrat plastique,
- une électrode inférieure (anode), de préférence transparente
- un deuxième système électroluminescent organique (plusieurs émetteurs de différentes couleurs peuvent être empilés), de couleur identique ou distincte au premier système
- et une électrode supérieure de préférence réfléchissante
- et éventuellement une surcouche comme une couche d'encapsulation (dépôt ou film par exemple polymérique par exemple adhésivé à l'électrode supérieure etc).Les premiers et deuxième dispositifs OLED peuvent être notamment adjacents et sur un support commun (film plastique, notamment de protection et/ou porteur de conducteurs électriques etc) côté substrats(s) ou côté électrode supérieure (sur les électrodes ou sur la surcouche).
On connait plusieurs types d'OLED :
- à émission par l'arrière (au travers d'un substrat transparent, dit « bottom emitting »), l'électrode inférieure étant transparente et l'électrode supérieure réfléchissante,
- à émission par l'avant (en sortie de l'électrode supérieure, dit « top emitting »), l'électrode inférieure étant réfléchissante et l'électrode supérieure transparente
- à émission par l'arrière et par l'avant en utilisant des électrodes transparentes ou semi transparentes
De préférence on utilise un premier dispositif OLED à émission par l'arrière donc le substrat est côté face F3 (plutôt que F2), et de préférence de même pour un deuxième dispositif OLED (et d'autres encore) adjacents, éventuellement avec un substrat commun.
Pour une électrode transparente (de préférence inférieure) il peut s'agir d'une grille métallique par exemple argent (de largeur adaptée), ou une couche électroconductrice transparente comme un oxyde conducteur transparent ('TCO') ou un empilement de couches minces avec au moins une (fine) couche métallique notamment d'argent entre deux couches diélectriques par exemple d'oxy et/ou de nitrure de métal ou métaux (Sn, Zn etc) ou silicium.
Le premier dispositif OLED peut avoir un ou des bords techniques (zones non émettrices), pour l'alimentation électrique, en périphérie de la zone émettrice typiquement en une ou des bandes notamment encadrant la zone émettrice. Ce bord technique peut être une zone d'amenée de courant. Un bord technique peut être de largeur W2 d'au plus 2cm et de préférence d'au plus 1cm ou même d'au plus 6mm ou 5mm.
La ou les premières discontinuités formant notamment un pictogramme sont de préférence des ouvertures pratiquées dans la couche de masquage intérieur dont la forme est ajustée au dessin recherché pour ledit pictogramme. Ces ouvertures peuvent être faites par retrait de matière ou le dessin est formé par masquage lors du dépôt de couche opaque.
Les discontinuités peuvent être des motifs (lignes) de largeur de 1 à 10 mm ou même5 mm pour des lignes ou de 1 à 10 cm ou 5cm pour des motifs plus étendus On peut souhaiter que la première signalétique et la deuxième et autres signalétique adjacente soient alignés, en une seule rangée, plutôt que superposées dans la zone de masquage.
On préfère que la couche de masquage intérieur (de préférence émail) masque le ou les bords techniques du premier dispositif OLED et même masque tout connecteur électrique (de type visible) présent entre la face F2 et F3, relié au premier dispositif OLED, connecteur tel qu'un câble, un ou des fils, un film conducteur etc.
De préférence, le premier dispositif OLED dépasse (par sa largeur et/ou sa hauteur) de la première signalétique par exemple d'au moins 5 mm et même d'au moins 1cm afin que la zone émettrice de lumière de l'OLED soit aisément en regard de la ou des premières discontinuités.
On préfère aussi que la couche de masquage intérieur (de préférence émail) masque le ou les bords techniques du premier dispositif OLED et même masque tout connecteur électrique (de type visible) présent entre la face F2 et F3, relié au premier dispositif OLED, connecteur tel qu'un câble, un ou des fils, un film conducteur etc. Dans une zone donnée périphérique on peut souhaiter plusieurs signalétiques (pictogrammes etc) lumineuses côte à côte (alignées par exemple, ou en coin du pare-brise etc).
Aussi, de manière préférée, une ou des deuxièmes discontinuités de la couche de masquage intérieur forme une deuxième signalétique, en signe(s) et/ou lettre(s), adjacente à la première signalétique, notamment espacée d'au moins 1cm et mieux d'au moins 2cm (car bords techniques d'au moins 5mm le plus souvent comme déjà indiqué). Un deuxième dispositif à diode électroluminescente organique dit OLED courbé, est entre les faces F2 et F3, deuxième dispositif OLED distinct du premier dispositif OLED, étant apte (et dédié) à illuminer la deuxième signalétique.
Et de préférence les premier et deuxième dispositifs OLED sont (montés) sur un support commun (éventuellement formant un substrat commun), de préférence montés sur le support commun (distincts du ou des substrats), d'épaisseur E2' avec E2+E'2 inférieur à E3 et de préférence subcentimétrique, courbé, donc côté émission de lumière, ou côté arrière. En particulier, le support commun (film plastique de préférence) côté émission de lumière (côté face F3) peut être contre ou collé aux premier et deuxième substrats des OLED notamment à émission par l'arrière. En particulier, le support commun côté arrière (face F2) peut être contre ou collé aux première et deuxième électrodes supérieures ou à des première et deuxième surcouches qui sont sur les première et deuxième électrodes supérieures des OLED notamment à émission par l'arrière. Les premier et deuxième dispositifs OLEDs notamment à émission par l'arrière sont notamment collés (colle, adhésif double face) au support commun ou posés sur le support commun. Les premier et deuxième dispositifs OLEDs peuvent être reliés au support commun par un ou des point(s) de soudure (par exemple 2 ou 4 points de soudure).
Ce support commun peut être d'épaisseur E2' d'au plus 0,15mm et même d'au plus 0,1mm. Sa forme générale peut être une bande rectangulaire (barrette) le long du premier bord (longitudinal ou latéral) éventuellement en L avec une partie coudée pour les connections électriques.
Ce support commun peut être diélectrique et même transparent notamment:
- verre notamment trempé chimiquement
- ou plastique (polymère) : comme un PET, polymide (dont kapton), PEEK
- voire être une feuille conductrice, métallique (si côté arrière).
Le support commun sert avantageusement :
- pour manipuler et assembler plus facilement un ensemble d'OLED prémontées
- pour réaliser plus aisément les connexions électriques
- comme renfort mécanique
Le support commun coté arrière peut être contre ou collé (adhésif double face, colle) à la face F2 ou le support commun coté avant (émetteur de lumière) peut être contre ou collé (adhésif double face, colle) à la F3. Le support commun coté arrière peut être séparé de la face F2 par l'intercalaire de feuilletage notamment en PVB. Le support commun côté avant peut être séparé de la face F3 par l'intercalaire de feuilletage notamment en PVB.
Le support commun coté arrière ou côté avant être encapsulé par l'intercalaire de feuilletage notamment en PVB, en utilisant 2 ou 3 feuillets (feuillet central évidé pour loger le support commun) pour le feuilletage, notamment de PVB.
Le support commun peut :
- être porteur de conducteurs électriques (fils, pistes, couche avec discontinuités d'isolation etc) alimentant le premier dispositif OLED et le deuxième dispositif OLED, et notamment est masqué par la couche de masquage intérieur (et/ou éventuellement un habillage du véhicule, le tableau de bord etc)
- et/ou dépasser de la tranche du pare-brise (en étant coudé avec une partie coudée dépassante ou en bande dépassante) et/ou courbé s'étendre jusqu'à la face F4 (en bordure), contre ou collé à la face F4,
- et/ou être porteur d'un ou de premiers composants électroniques incluant un premier microcontrôleur (« driver ») adressant le premier dispositif OLED et régulant l'alimentation électrique (le courant de préférence) du premier dispositif OLED et même d'un ou de deuxièmes composants électroniques incluant un deuxième microcontrôleur adressant le deuxième dispositif OLED et régulant l'alimentation électrique (le courant de préférence) du deuxième dispositif OLED.
Chaque microcontrôleur identifie dans le signal de commande si un ordre est destiné à sa signalétique dédié et ajuste le niveau (l'intensité du courant par exemple) en conséquence.
Pour chaque OLED, sur le support commun on préfère deux conducteurs électriques pour le signal de commande décodé par le microcontrôleur dédié et deux conducteurs électriques pour le signal de puissance connecté au microcontrôleur.
Un sous-ensemble de pictogrammes, tel que des bâtonnets et/ou combinés avec de lettres, peuvent être illuminés sélectivement en temps réel pour former de façon simple un indicateur un niveau (d'huile, d'essence), la vitesse, ou un état d'usure....
Par ailleurs, on peut prévoir des moyens de modulation de la puissance OLED selon au moins deux configurations : une configuration pour la vision nocturne, dans laquelle la puissance du premier dispositif OLED est ajustée pour que la luminance de la première signalétique soit typiquement comprise entre environ 30 et environ 100Cd/m² et une configuration pour la vision diurne, dans laquelle la puissance du premier dispositif OLED est ajustée pour que de la première signalétique soit typiquement comprise entre environ 200 et environ 2000Cd/m². En vision diurne, on peut aussi ajuster la luminance en fonction de l'éclairement extérieur, en particulier avec un capteur d'éclairement naturel dans le pare-brise ou ailleurs dans le véhicule : s'il y a beaucoup de soleil on allume fort l'OLED, si ça se couvre on allume moins fort pour ne pas éblouir.
Si nécessaire, un film de protection transparent ou un vernis de protection transparent peut couvrir l'ensemble support commun et dispositif OLED. Par exemple il s'agit d'un vernis époxy transparent et protecteur, par exemple du type de celui commercialisé par la société MARABU sous la référence MARABU GL 914®,
Le support commun à l'avant, transparent comme un PET un polyamide, peut porter un filtre coloré commun ou dédié à tout dispositif OLED le nécessitant (filtre côté assemblage ou côté opposé à l'assemblage), en particulier un ensemble de couches colorantes.
Le premier dispositif OLED notamment à émission par l'arrière peut être couvert par une couche de protection, diélectrique éventuellement porteur de conducteurs électriques alimentant le premier dispositif OLED, -formant un film adhésif par contact ou avec une face principale collante ou encore une couche déposée (vernis, résine, dépôt par voie liquide)-. Eventuellement cette couche de protection dépasse d'un ou de bords du premier dispositif OLED et couvrant un deuxième dispositif OLED adjacent au premier dispositif OLED notamment à émission par l'arrière apte à illuminer un deuxième pictogramme.
La couche de protection dépassante est côté émission de lumière (sur l'électrode supérieure choisie transparente) ou côté opposé à l'émission de lumière (sur l'électrode supérieure choisie réfléchissante notamment en aluminium ou en argent). La couche de protection dépassante peut être :
- un film porteur des premier et deuxième dispositifs OLED notamment à émission par l'arrière en particulier porteur des premier et deuxième substrats distincts
- un film collant couvrant un support commun (film plastique, verre etc) -qui peut être un substrat commun-, porteur des premiers et deuxième dispositifs OLED notamment à émission par l'arrière
- un film collant sur la face F2 si le premier dispositif OLED notamment à émission par l'arrière est contre ou (pré)collé à la face F2 (comme le deuxième dispositif OLED)
- une couche déposée sur le support commun- qui peut être un substrat commun-porteur des premier et deuxième dispositifs OLED notamment à émission par l'arrière.
Par ailleurs, il peut y avoir plusieurs configurations d'agencement du premier dispositif OLED vis-à-vis de l'intercalaire de feuilletage.
Dans un premier mode de réalisation ;
- le premier dispositif OLED est monté sur la face F2 directement ou via un support commun avec un deuxième dispositif OLED adjacent au premier dispositif OLED apte à illuminer une deuxième signalétique, notamment premier dispositif OLED collé par un adhésif double face et éventuellement la première face principale de collage est trouée au droit du premier dispositif OLED (zone active et bords techniques) notamment avec un surépaisseur de l'intercalaire de feuilletage par rapport au premier dispositif OLED laissant un espace (entre la face F3 et l'OLED) de préférence de hauteur d'au plus 0,4mm ou d'au plus 0,3mm voire même du deuxième dispositif OLED éventuel et de préférence l'intercalaire de feuilletage couvre l'éventuel support commun (et même l'encapsule),
- ou le premier dispositif OLED est monté sur la face F3 directement ou via un support commun avec un deuxième dispositif OLED adjacent au premier dispositif OLED apte à illuminer une deuxième signalétique, notamment premier dispositif OLED collé par un adhésif double face transparent, éventuellement la deuxième face principale de collage est trouée au droit du premier dispositif OLED (zone actives et bord techniques) notamment avec un surépaisseur de l'intercalaire de feuilletage par rapport au premier dispositif OLED laissant un espace (entre la face F2 et l'OLED) de préférence de hauteur d'au plus 0,4mm ou d'au plus 0,3mm voire même du deuxième dispositif OLED éventuel et de préférence l'intercalaire de feuilletage couvre l'éventuel support commun (et même l'encapsule),
Réaliser le trou au droit du premier dispositif OLED peut assurer un meilleur feuilletage.
Si le premier dispositif OLED est d'épaisseur E2 inférieure à 0,15mm ou même mieux à 0,1mm, on peut aisément le feuilleter entre deux feuillets d'intercalaires.
Si le premier dispositif OLED est d'épaisseur supérieure à 0,15mm ou même à 0,1mm, on peut préférer le feuilleter avec trois feuillets d'intercalaire et de préférence avec un feuilet central d'épaisseur sensiblement égal à E2 ou à E'2+E2 si il est sur un support commun.
On peut faire une réserve d'un feuillet central ou d'un unique feuillet:
- pour loger le premier dispositf OLED (si individuel)
- pour loger le support commun porteur du premier dispositf OLED
On peut faire dans un feuillet unique ou non autant de réserves pour loger uniquement les dispositfs OLED, ce feuilet couvrant le support commun porteur du dispositfs OLED.
Le premier dispositif OLED peut être au sein de l'intercalaire de feuilletage, donc le premier dispositif OLED est encapsulé par la matière thermoformable avec une épaisseur non nulle E21 d'intercalaire de feuilletage côté F2 et avec une épaisseur non nulle E22 côté F3, E21 et E22 ne sont pas forcément égales.
La matière thermoformable constituant ledit intercalaire est choisie dans le groupe des butyrals de polyvinyle (PVB) comme le RC41 de la société Solutia ou d'Eastman, des polychlorures de vinyl (PVC) plastifiés, du polyuréthane (PU) ou des éthylènes vinyle acétate (EVA). De préférence la matière thermoformable est un butyral de polyvinyle (PVB), ayant éventuellement une section transversale diminuant en forme en coin du haut vers le bas du vitrage feuilleté.
L'intercalaire de feuilletage peut avoir une section transversale diminuant en forme en coin du haut vers le bas du pare-brise feuilleté, en particulier pour éviter une double image dans le cas d'un affichage tête haute (HUD) additionnel.
On peut souhaiter conserver les propriétés acoustiques des pare brises. L'intercalaire de feuilletage peut comprendre au moins une couche dite de milieu en matériau plastique viscoélastique aux propriétés d'amortissement vibro-acoustique notamment à base de polyvinylbutyral et de plastifiant, et l'intercalaire, et comprenant en outre deux couches externes en PVB standard, la couche de milieu étant entre les deux couches externes.
et même pour utiliser un dispositif d'affichage tête haute de type HUD, éventuellement l'une ou les deux couches externes a une section transversale diminuant en forme en coin du haut vers le bas du vitrage feuilleté, la couche en matériau plastique viscoélastique aux propriétés d'amortissement vibro-acoustique ayant une section transversale constante du haut vers le bas du vitrage feuilleté.
La couche de masquage intérieur (respectivement extérieur) peut être une couche d'émail noir, une couche de peinture ou une encre opaque de préférence sur la face F2 (respectivement F3 ou F4) ou sur l'intercalaire de feuilletage voire sur un film porteur additionnel (PET etc).
Avantageusement, les couches de masquages intérieur et extérieur sont constituées du même matériau, de préférence en émail notamment noir, en F2 et F3 ou en F2 et F4.
Le premier vitrage comme le deuxième vitrage peut être parallélépipédique, avec des feuilles ou des faces principales rectangulaires, carrées ou même de toute autre forme (ronde, ovale, polygonale). Il peut être de grande taille, par exemple de surface supérieure à 0,5 ou à 1m².
Le premier et/ou deuxième vitrage peut (selon le rendu esthétique, l'effet optique souhaité) être un verre clair (de transmission lumineuse T_{L} supérieure ou égale à 90% pour une épaisseur de 4mm), par exemple un verre de composition standard sodocalcique comme le Planilux® de la société Saint-Gobain Glass, ou extra-clair (T_{L} supérieure ou égale à 91,5% pour une épaisseur de 4 mm), par exemple un verre silico-sodo-calcique avec moins de 0,05% de Fe III ou de Fe₂O₃ comme le verre Diamant® de Saint-Gobain Glass, ou Optiwhite® de Pilkington, ou B270® de Schott, ou d'autre composition décrite dans le document WO04/025334.
Le verre du premier et/ou deuxième vitrage peut être neutre (sans coloration), ou (légèrement) teinté notamment gris ou vert, tel le verre VENUS ou TSA de la société Saint-Gobain Glass. Le verre du premier et/ou deuxième vitrage peut avoir subi un traitement chimique ou thermique du type durcissement, recuit ou une trempe (pour une meilleure résistance mécanique notamment) ou être semi trempé.
La transmission lumineuse T_{L} peut être mesurée selon la norme ISO 9050 :2003 en utilisant l'illuminant D65, et est la transmission totale (notamment intégrée dans le domaine du visible et pondérée par la courbe de sensibilité de l'œil humain), tenant compte à la fois de la transmission directe et de l'éventuelle transmission diffuse, la mesure étant faite par exemple à l'aide d'un spectrophotomètre muni d'une sphère intégrante, la mesure à une épaisseur donnée étant ensuite convertie le cas échéant à l'épaisseur de référence de 4mm selon la norme ISO 9050 :2003.
Pour un pare-brise la T_{L} peut être de préférence d'au moins 70% et même d'au moins 75%.
Dans une réalisation, le premier vitrage est en verre minéral et le deuxième vitrage est en verre organique (comme le PC, le PMMA, le copolymère cyclo-oléfine (COC) ou encore le polyéthylène téraphtalate (PET) éventuellement protégé par un revêtement (en face F4).
Le vitrage extérieur peut comporter des couches minces fonctionnelles sur l'une ou l'autre de ses faces F1 et F2 ou bien les deux : on peut citer une couche hydrophobe ou autonettoyante photocatalytique en face F1, une couche ou un empilement de couches minces réfléchissant le rayonnement solaire en face F2 (et servant pour faire ou un des capteurs capacitifs, une antenne etc).
Afin de limiter l'échauffement dans l'habitacle ou de limiter l'usage d'air conditionné, l'un des vitrages au moins (de préférence le verre extérieur) est teinté, et le vitrage feuilleté peut comporter également une couche de réfléchissant ou absorbant le rayonnement solaire, de préférence en face F4 ou en face F2 ou F3, en particulier :
- une couche d'oxyde transparent électro-conducteur dite couche TCO (en face F4) ou un empilement de couches minces comprenant au moins une couche TCO,
- un empilement de couches minces comprenant au moins une couche d'argent (en F2 ou F3), la ou chaque couche d'argent étant disposée entre des couches diélectriques.
On peut cumuler couche (à l'argent) en face F2 et/ou F3 et couche TCO en face F4.

La couche TCO (d'un oxyde transparent électro-conducteur) est de préférence une couche d'oxyde d'étain dopé au fluor (SnO₂ :F) ou une couche d'oxyde mixte d'étain et d'indium (ITO). Pour des couches en ITO, l'épaisseur sera généralement d'au moins 40 nm, voire d'au moins 50 nm et même d'au moins 70 nm, et souvent d'au plus 150 nm ou d'au plus 200 nm. Pour des couches en oxyde d'étain dopé au fluor, l'épaisseur sera généralement d'au moins 120 nm, voire d'au moins 200 nm, et souvent d'au plus 500 nm. Par exemple la couche basse émissivité comprend la séquence suivante :sous-couche haut indice/sous-couche bas indice/ une couche TCO/ surcouche diélectrique optionnelle. Comme exemple préféré de couche basse émissivité (protégée durant une trempe, on peut choisir sous-couche haut indice (<40 nm) / sous-couche bas indice (<30 nm) / une couche ITO/ surcouche haut indice (5 - 15 nm)/ surcouche bas indice (<90 nm) barrière/ dernière couche (< 10 nm). On peut citer comme couche basse émissivité celles décrites dans le brevet US2015/0146286, sur la face F4, notamment dans les exemples 1 à 3.
La couche transparente en F3 ou F4 peut être est isolée électriquement ou même absente dans la zone en regard de la première signalétique (du premier dispositif OLED) pour des raisons de couleur.
La face F3 peut donc comporter une couche chauffante, de préférence neutre en transmission, éventuellement sous la couche de masquage intérieur en F3, surmontée de premières et deuxièmes bandes d'amenée de courant typiquement sur les premier et deuxième bords longitudinaux, notamment opaques, par exemple en émail à l'argent.
Aussi, la première signalétique, notamment sur un premier bord longitudinal, peut être décalée d'une première bande d'amenée de courant opaque d'une couche chauffante en F3. La première bande d'amenée de courant peut être plus centrale que la première signalétique.
L'invention et ses avantages seront mieux compris à la lecture des modes de réalisation non limitatifs décrits ci après, en lien avec les figures suivantes.

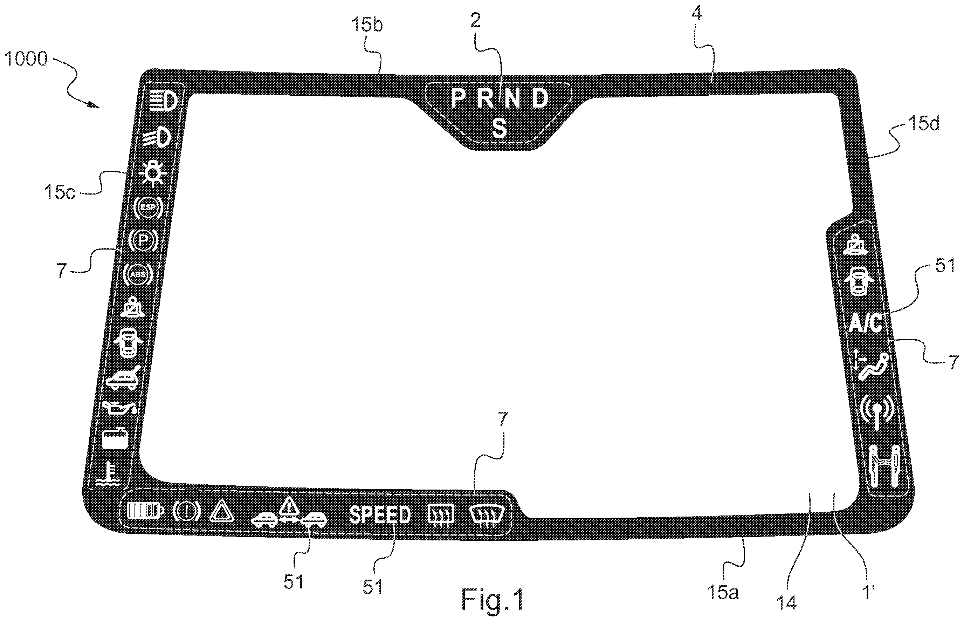

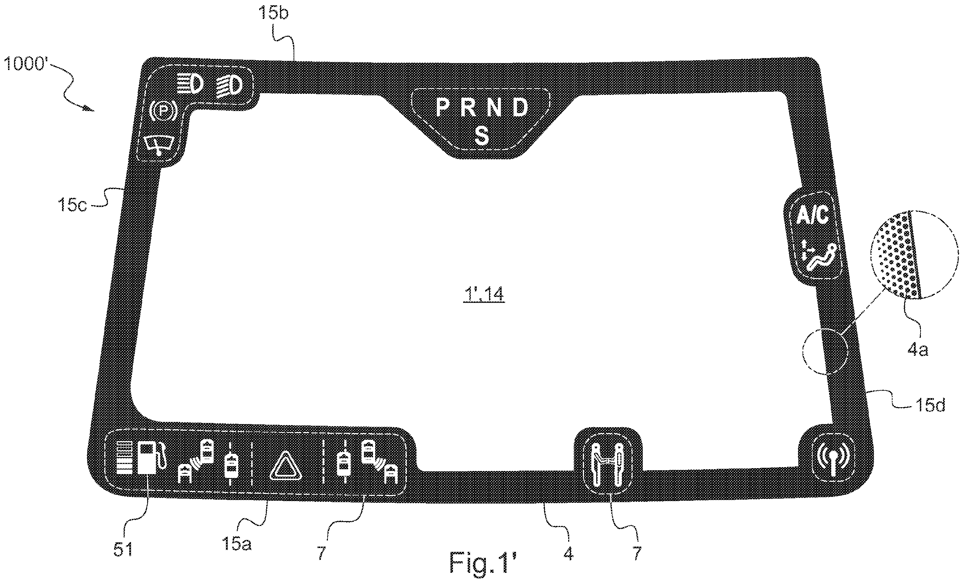

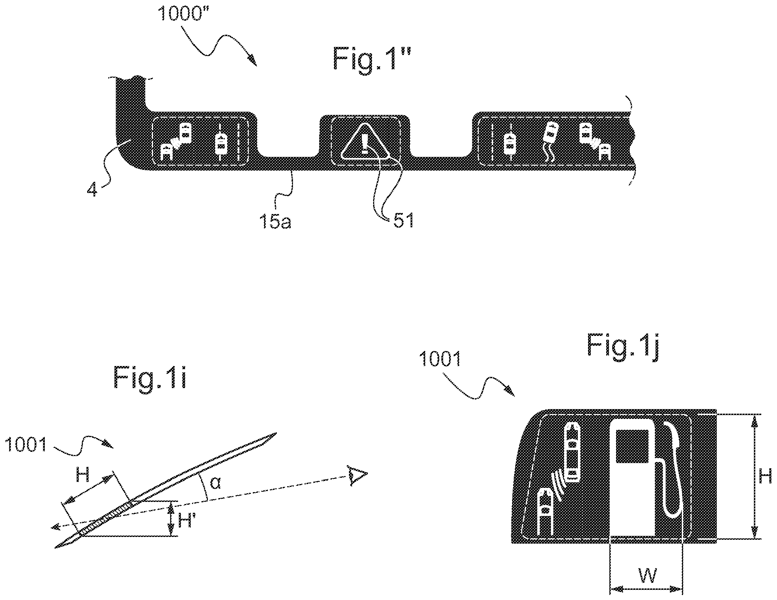

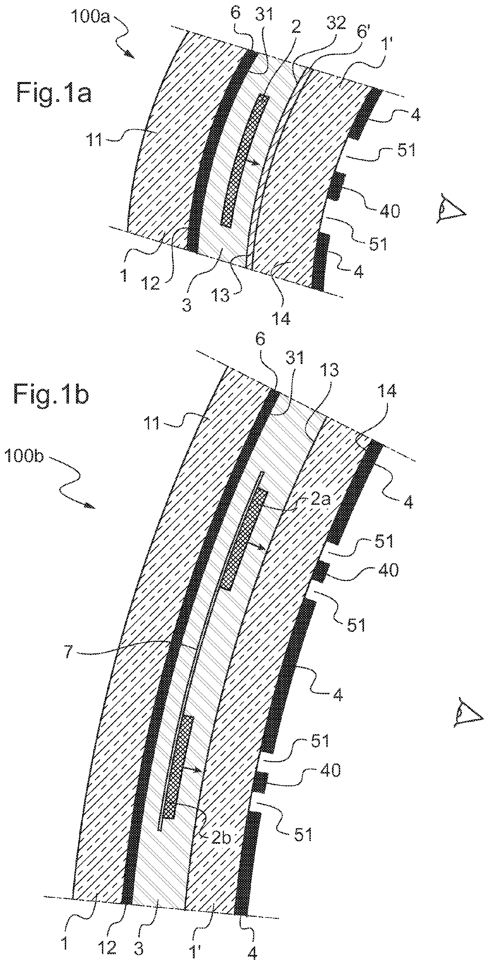

La figure 1 représente une vue de face côté habitacle d'un premier pare-brise comprenant les signalétiques lumineuses internes selon la présente invention.
La figure 1' représente une vue de face côté habitacle d'un deuxième pare-brise comprenant les signalétiques lumineuses internes selon la présente invention.
La figure 1" représente une vue partielle de face côté habitacle d'un troisième pare-brise comprenant les signalétiques lumineuses internes selon la présente invention.
La figure 1i est une vue de coté qui montre l'inclinaison d'un pare-brise avec une signalétique lumineuse interne selon l'invention et la figure 1j montre des signalétiques étirées dans le sens de la verticale pour compenser l'effet de l'inclinaison.
La figure 1a représente une vue partielle en coupe latérale d'un pare-brise feuilleté comprenant une ou des signalétiques lumineuses internes selon la présente invention.
La figure 1b représente une vue partielle en coupe longitudinale d'un pare-brise feuilleté comprenant une ou des signalétiques lumineuses internes selon la présente invention.
La figure 2a représente une vue partielle en coupe latérale d'un pare-brise feuilleté comprenant une ou des signalétiques lumineuses internes selon la présente invention.
La figure 2b représente une vue partielle en coupe longitudinale d'un pare-brise feuilleté comprenant une ou des signalétiques lumineuses internes selon la présente invention.
La figure 2c représente une vue partielle en coupe latérale d'un pare-brise feuilleté comprenant une ou des signalétiques lumineuses internes selon la présente invention.
La figure 2d représente une vue partielle en coupe longitudinale d'un pare-brise feuilleté comprenant une ou des signalétiques lumineuses internes selon la présente invention.
La figure 3 représente une vue partielle en éclaté en coupe longitudinale d'un pare-brise feuilleté comprenant une ou des signalétiques lumineuses internes selon la présente invention.
La figure 3a représente une vue partielle en éclaté en coupe latérale d'un pare-brise feuilleté comprenant une ou des signalétiques lumineuses internes selon la présente invention.
La figure 3b représente une vue partielle en éclaté en coupe latérale d'un pare-brise feuilleté comprenant une ou des signalétiques lumineuses internes selon la présente invention.
La figure 4 représente une vue partielle en éclaté en coupe longitudinale d'un pare-brise feuilleté comprenant une ou des signalétiques lumineuses internes selon la présente invention.
La figure 5 représente une vue partielle en éclaté en coupe longitudinale d'un pare-brise feuilleté comprenant une ou des signalétiques lumineuses internes selon la présente invention.

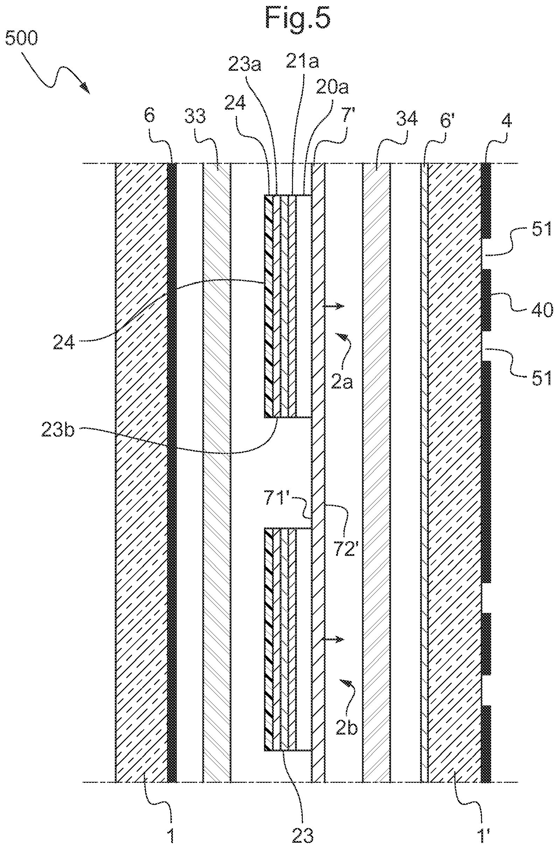

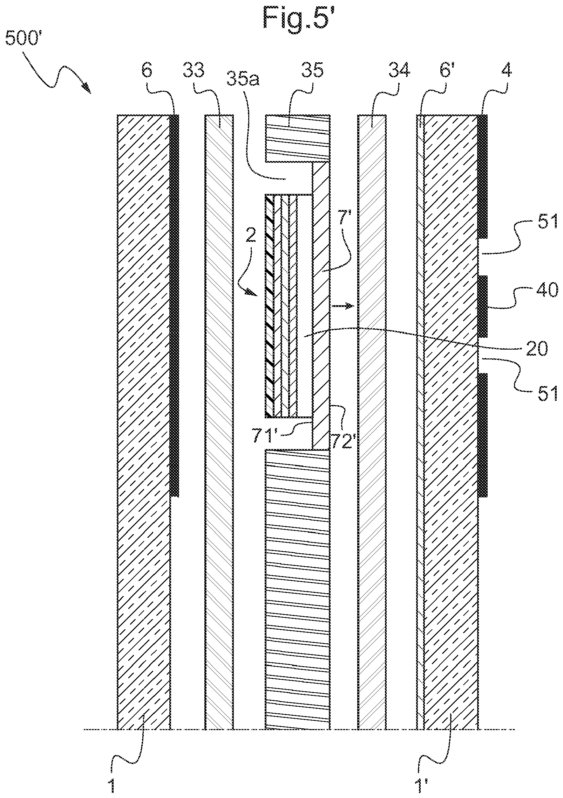

La figure 5' représente une vue partielle en éclaté en coupe latérale d'un pare-brise feuilleté comprenant une ou des signalétiques lumineuses internes selon la présente invention.

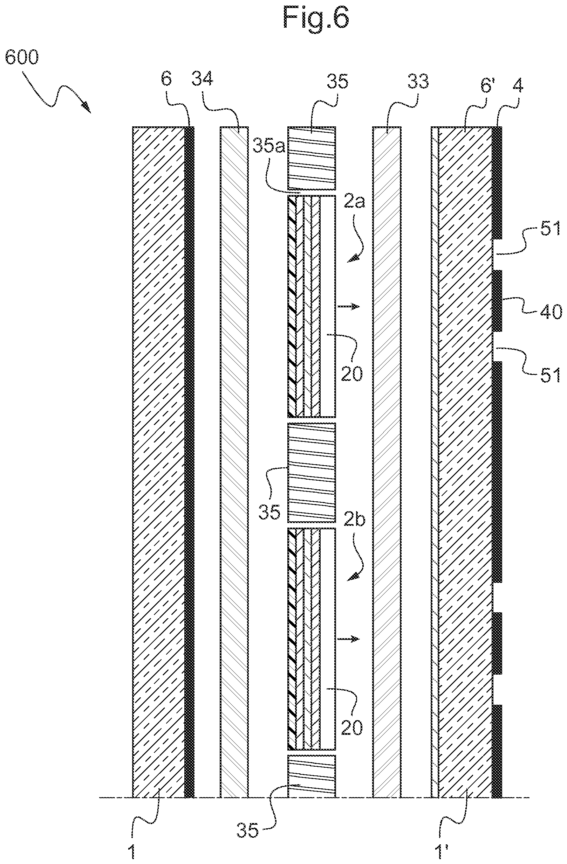

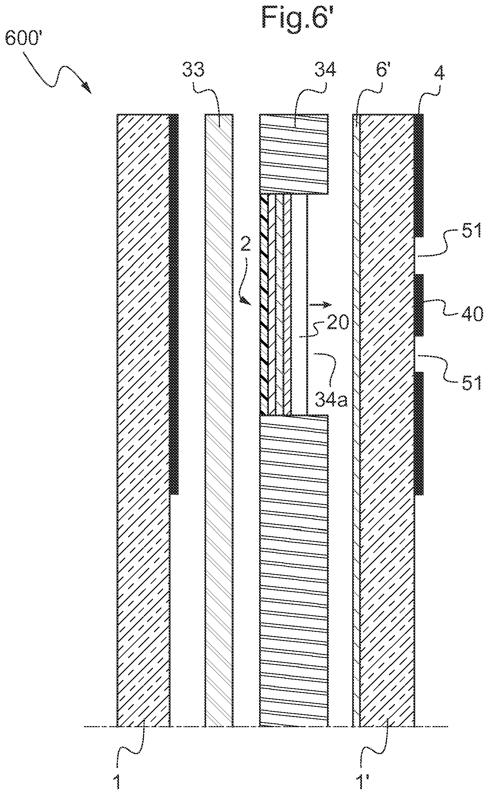

La figure 6 représente une vue partielle en éclaté en coupe longitudinale d'un pare-brise feuilleté comprenant une ou des signalétiques lumineuses internes selon la présente invention.
La figure 6' représente une vue partielle en éclaté en coupe latérale d'un pare-brise feuilleté comprenant une ou des signalétiques lumineuses internes selon la présente invention.

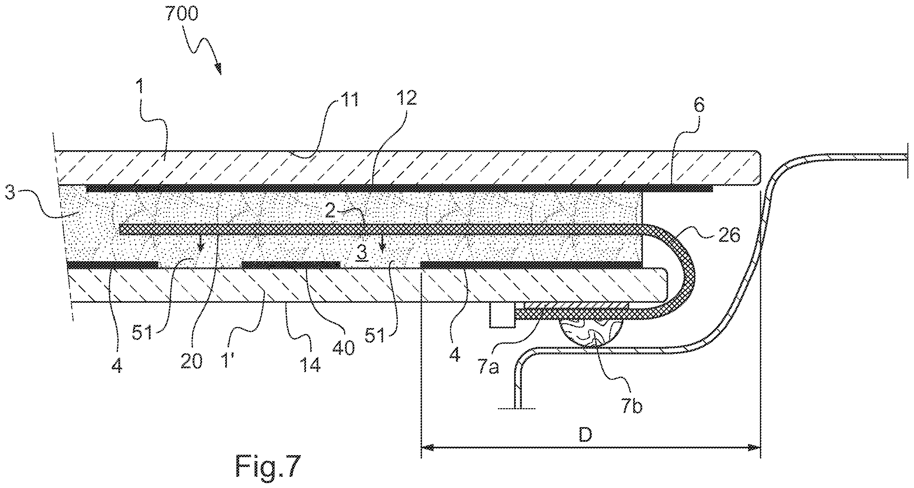

La figure 7 représente une vue partielle en coupe d'un pare-brise feuilleté comprenant une ou des signalétiques lumineuses internes selon la présente invention.

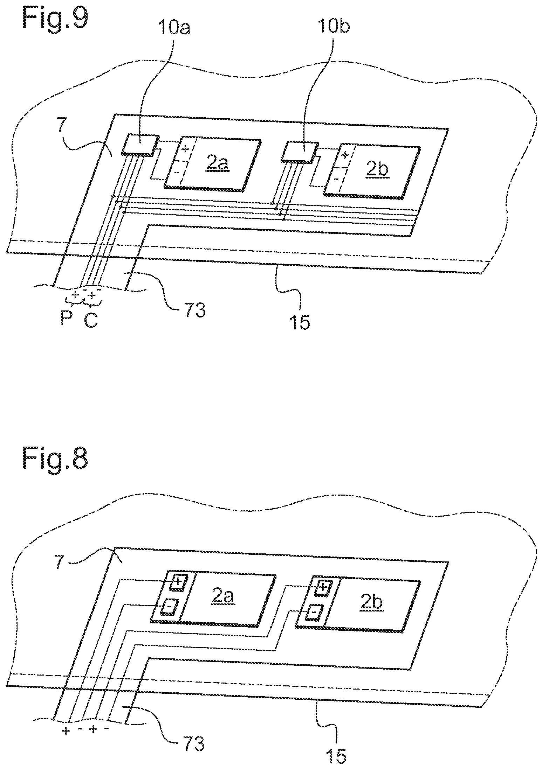

La figure 8 représente une vue en perspective d'un support commun porteur de deux dispositifs OLED pour le rétroéclairage et porteurs des conducteurs d'amenée de courant feuilleté dans le pare-brise,
La figure 9 représente une vue en perspective d'un support commun porteur de deux dispositifs OLED pour le rétroéclairage et porteurs des conducteurs d'amenée de courant de deux microcontrôleurs feuilleté dans le pare-brise.

La figure 1 représente une vue de face côté habitacle d'un pare-brise comprenant les signalétiques internes lumineuses selon la présente invention.
Le pare-brise 1000 est feuilleté comporte un premier vitrage externe bombé avec des faces principales F1 (la plus externe) et F2, un intercalaire de feuilletage polymérique comme un PVB, un deuxième vitrage interne1' bombé avec des faces principales F3 et F4 (la plus interne).
Il est de forme rectangulaire, définis par ses bords latéraux et longitudinaux et avec un encadrement périphérique opaque, ici noir, en face F2 et en face F3 ou en F2 et F4. La couche de masquage intérieur 4 est opaque et peut être en émail noir déposé sur la face 13 ou F3 ou la face 14 ou F4 du verre interne 1', en peinture ou encre optiquement opaque déposée sur l'intercalaire polymère ou en couche polymère opaque, teintée ou peinte, rapportée et feuilletée entre le verre intérieur et l'intercalaire. Le dépôt de cette couche se fait selon toute technique connue de l'homme de l'art par exemple, de façon non limitative, par les techniques de sérigraphie, les techniques du type jet d'encre ou encore les techniques du type offset, flexogravure ou encore héliogravure.
Cette couche 4 contient des discontinuités 51 formant des signalétiques telles que des pictogrammes. Ce sont des ouvertures pratiquées dans la couche de masquage 4 dont la forme est ajustée à chaque dessin recherché. Ce sont en particulier des zones évidées de la couche de masquage 4, c'est-à-dire dépourvues du matériau de masquage (émail), et dont la forme correspond au dessin reconnu par le conducteur (ou le passager) comme une information simple et immédiate lors de l'illumination de cette zone par un premier dispositif OLED, chaque zone évidée étant ainsi rétroéclairée.
Par conséquent, l'information visuelle est portée par la couche de masquage intérieur.

Une pluralité de signalétiques chacune rétroéclairée par un dispositif OLED dédié sont situées le long du bord longitudinal inférieur 15a (en position monté) en particulier côté conducteur, surtout pour celles choisis pour l'aide à la conduite (nécessitant une réaction rapide du conducteur. par exemple les dispositifs OLED sont sur un support commun 7 (non visible mais représenté en pointillés).
On peut citer :
- témoin d'excès de vitesse (« SPEED » en lettres) qui s'allume éventuellement en rouge ou éventuellement en orange quand la limite est presque atteinte
- diagnostic anti collision frontale, par exemple s'allumant si le véhicule est trop près du véhicule de devant (voiture, moto etc), ne respectant pas la distance de sécurité
- un triangle de secours en cas de situation de danger.
Une pluralité de signalétiques chacune rétroéclairée par un dispositif OLED dédié sont situées le long du bord longitudinal supérieur 15b (en position monté) en particulier en position centrale classiquement utilisé pour la fixation du rétroviseur, par exemple les dispositifs OLED sont sur un support commun 7 (non visible mais représenté en pointillés).
Une pluralité de signalétiques chacune rétroéclairée par un dispositif OLED dédié sont situées le long du bord latéral gauche 15c (en position monté) par exemple les dispositifs OLED sont sur un support commun 7 (non visible mais représenté en pointillés). On peut citer :
- des pictogrammes sur l'état du véhicule : niveau d'huile, température, porte mal fermée, ceinture non attachée,
- des pictogrammes sur les feux allumés ou non
Une pluralité de signalétiques chacune rétroéclairée par un dispositif OLED dédié sont situées le long du bord latéral droit 15d (en position monté) par exemple les dispositifs OLED sont sur un support commun 7 (non visible mais représenté en pointillés). On peut citer :
- des pictogrammes sur la porte (mal fermée), la ceinture de sécurité (non attachée),
- des pictogrammes sur la climatisation, la ventilation
- des pictogrammes sur une information sur l'environnement extérieur : un témoin de localisation d'un ami à proximité du véhicule
- un témoin de connectivité à un réseau de télécommunication
La largeur de la bande d'émail 4 est judicieusement plus grande dans les zones des signalétiques.

La figure 1' représente une vue de face côté habitacle d'un deuxième pare-brise comprenant les signalétiques lumineuses internes selon la présente invention.

Une pluralité de signalétiques chacune rétroéclairée par un dispositif OLED dédié sont situées le long du bord longitudinal inférieur 15a (en position monté) côté conducteur, par exemple les dispositifs OLED sont sur un support commun 7 (non visible mais représenté en pointillés).
On peut citer :
- diagnostic anti collision latéral gauche, par exemple s'allumant si le véhicule doublant et/ou sur la file de gauche est trop près
   diagnostic anti collision latéral droit, par exemple s'allumant si le véhicule sur la file de droite est trop près
- diagnostic de positionnement sur une file, par exemple s'allumant si on est trop déporté vers la gauche ou vers la droite
Le support commun peut être en L pour s'étendre de part et d'autre d'un coin comme ici bord latéral gauche 15c et bord longitudinal supérieur 15b.

La figure 1" représente une vue partielle de face côté habitacle d'un troisième pare-brise comprenant les signalétiques lumineuses internes selon la présente invention.
Un pictogramme par exemple ici le triangle de secours peut être isolé des autres pictogrammes, avec une surépaisseur d'émail dédié à ce pictogramme. Par exemple le premier dispositif OLED est ici monté sur la face F2 ou F3 ou feuilleté entre la face F2 et F3 (sans support commun).

La figure 1i est une vue de coté qui montre la forte inclinaison d'un pare-brise avec une signalétique lumineuse interne selon l'invention de hauteur réelle H et de hauteur apparente H' (perçue par le conducteur en face).
Par exemple l'angle α est d'environ 25°.
Et la figure 1j montre des signalétiques étirées dans le sens de la verticale pour compenser l'effet de l'inclinaison.

La figure 1a représente une vue partielle en coupe latérale d'un pare-brise feuilleté 100a comprenant une ou des signalétiques lumineuses internes selon la présente invention.
Le pare-brise feuilleté de véhicule 100a à signalétique lumineuse interne, comprend :
- un premier vitrage, bombé, de préférence en verre minéral, éventuellement teinté, notamment gris ou vert, avec une première face principale dite F1 destinée à être coté extérieur du véhicule et une deuxième face principale opposée dite F2, vitrage d'épaisseur E1 de préférence d'au plus 2,5mm, même d'au plus 2mm - notamment 1,9mm, 1,8mm, 1,6mm et 1,4mm- ou même d'au plus1,3mm ou d'au plus 1mm, par exemple en verre TSA (de la société demanderesse) et de 2,1mm d'épaisseur,
- un deuxième vitrage, bombé (comme le premier vitrage), de préférence en verre minéral, avec une troisième face principale dite F3 et une quatrième face principale opposée dite F4, notamment destinée à être côté intérieur du véhicule, d'épaisseur E'1 de préférence inférieure à E1, même d'au plus 2mm - notamment 1,9mm, 1,8mm, 1,6mm et 1,4mm- ou même d'au plus1,3mm ou d'au plus 1mm, l'épaisseur totale des vitrages E1+E'1 étant de préférence strictement inférieure à 4mm, même à 3,7mm, par exemple en verre TSA (de la société demanderesse) et de 2,1mm d'épaisseur
lesdites premier et deuxième vitrages étant reliés entre eux via les faces F2 et F3 par un intercalaire de feuilletage en matière polymérique thermoformable (clair, extraclair de préférence thermoplastique et même en PVB, d'épaisseur (totale) E3 d'au plus 2,2mm mieux d'au plus 2mm, d'au plus 1,5mm ou même d'au plus 1mm, par exemple à partir de 1, 2 ou 3 feuillets, notamment en retrait du chant du deuxième vitrage (d'au plus 5mm ou même d'au plus 2mm ou d'au plus 1mm) et même en retrait du chant du premier vitrage-(d'au plus 5mm ou même d'au plus 2mm ou d'au plus 1mm), intercalaire comportant une première face principale de collage côté face F2 et une deuxième face principale de collage côté face F3,
- une première couche périphérique dite de masquage intérieur 4,40 en un matériau opaque, qui le long d'une bordure de la face F3, sur la face F4, notamment le long d'une bordure de la face F4, -notamment (directement) sur la face F4, ladite couche de masquage intérieur étant discontinue comprenant ainsi une ou des premières discontinuités 51 formant une première signalétique, en signe(s) et/ou lettre(s),
- une deuxième couche périphérique dite de masquage extérieur 6 en matière opaque, sur la face F2, en regard de la couche de masquage intérieur et de la ou les premières discontinuités, -le long d'une bordure de la face F2-,
En outre, un premier dispositif à diode électroluminescente organique dit OLED, courbé (car flexible, souple) étant entre les faces F2 et F3, étant apte à illuminer la première signalétique (par rétroéclairage), ainsi étant en regard de la première signalétique et en regard de la couche de masquage intérieur, et apte à émettre de la lumière uniquement vers la première signalétique.
Le premier dispositif dit OLED 2 est d'épaisseur E2 inférieure à E3 et de préférence subcentimétrique et même d'au plus 0,5mm et mieux d'au plus 0,35mm en particulier d'épaisseur sensiblement égale à un feuillet thermoplastique donc de 0,76mm, 0,38mm ou 0,17mm.

Le premier dispositif OLED est par exemple individuel (non porté avec un dispositif OLED sur un support commun) est ici encapsulé par la matière thermoformable au moyen de deux ou trois feuillets de PVB.Une couche fonctionnelle, comme une couche conductrice transparente 6' peut être sur la face F3 et servir par exemple comme couche anti solaire, chauffante (anti buée etc). Si nécessaire, pour des raisons de couleur on peut supprimer cette couche dans la ou les zones de signalétiques.
La couche de masquage intérieur 4 et la couche de masquage extérieur 6 sont constituées du même matériau de préférence en émail.

La figure 1b représente une vue partielle en coupe longitudinale d'un pare-brise feuilleté 100b comprenant une ou des signalétiques lumineuses internes selon la présente invention.
Le pare-brise feuilleté de véhicule 100b à signalétique lumineuse interne diffère du pare-brise 100a en ce qu'un support commun flexible 7 porte plusieurs dispositifs OLEDS chacun dédié pour rétroéclairer une signalétique donné (ici deux).
Le support commun flexible 7 est ici à l'arrière des dispositifs OLEDS. Il peut être avantageusement porteur de conducteurs électrique pour alimenter les dispositifs OLEDS et s'étendre jusqu'à un bord du pare-brise et même dépasser du pare-brise pour simplifier les connexions électriques.
Le support commun flexible 7 peut être un plastique comme un PET, mince d'au plus 0,2mm, ou encore un verre notamment trempé chimiquement. il n'est pas nécessairement transparent ou porteurs de conducteurs transparents car masqué par la couche 4 (et la couche 6).

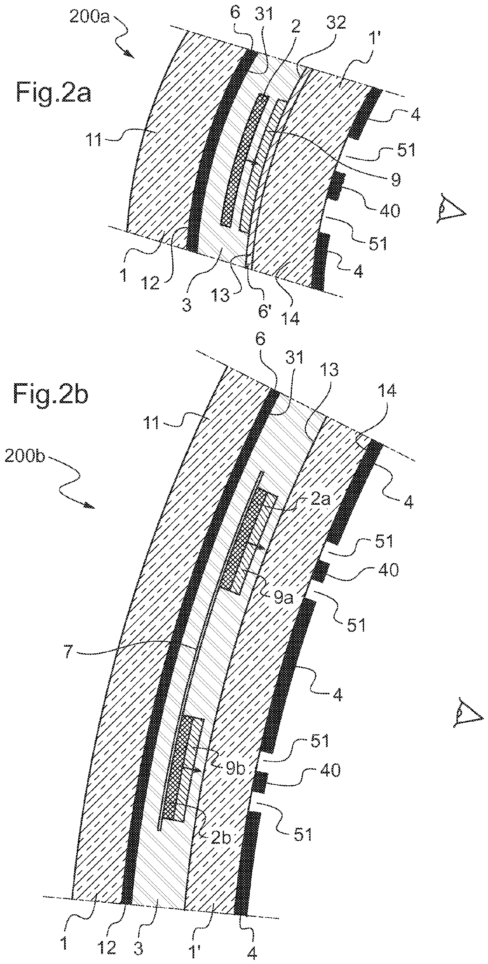

La figure 2a représente une vue partielle en coupe latérale d'un pare-brise feuilleté 200a comprenant une ou des signalétiques lumineuses internes selon la présente invention.
Le pare-brise feuilleté de véhicule 200a à signalétique lumineuse interne diffère du pare-brise 100a en ce qu'une couche filtrante colorée 9 est déposée (sol-gel etc) ou est un film contre ou fixé sur la face F3 directement ou sur la couche fonctionnelle optionnelle 6'. Dans ce cas, cela peut servir pour choisir la couleur à partir d'un dispositif OLED émetteur dans le blanc ou ajuster la couleur émise par un dispositif OLED coloré.

La figure 2b représente une vue partielle en coupe longitudinale d'un pare-brise feuilleté 200b comprenant une ou des signalétiques lumineuses internes selon la présente invention.

Le pare-brise feuilleté de véhicule 200b à signalétique lumineuse interne diffère du pare-brise 100b en ce qu'une couche filtrante colorée 9a, 9b est déposée (sol-gel etc) sur les dispositifs OLEDS'. Dans ce cas, cela peut servir pour choisir la couleur à partir d'un dispositif OLED émetteur dans le blanc ou ajuster la couleur émise par un dispositif OLED coloré.

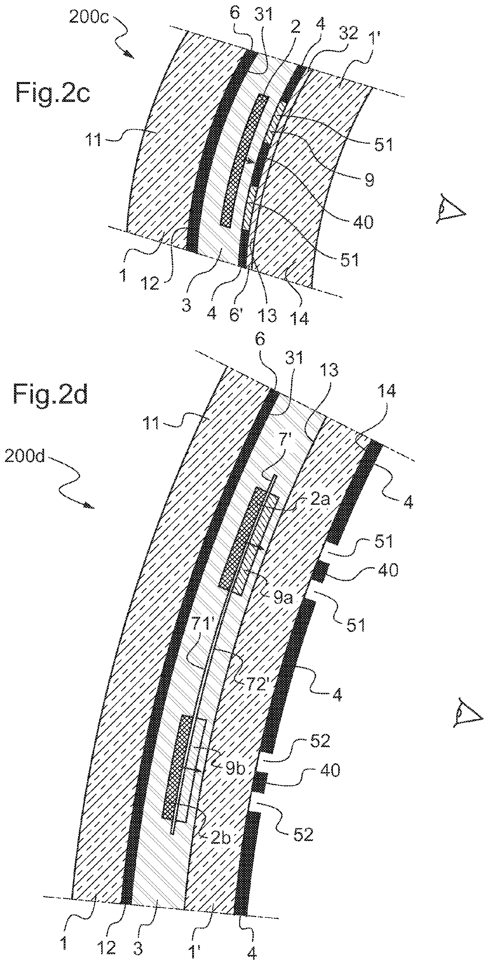

La figure 2c représente une vue partielle en coupe latérale d'un pare-brise feuilleté 200c comprenant une ou des signalétiques lumineuses internes selon la présente invention.
Le pare-brise feuilleté de véhicule 200c à signalétique lumineuse interne diffère du pare-brise 100a en ce que
- la couche 4 est déposée sur la face F3 directement (de préférence) ou sur la couche fonctionnelle optionnelle 6'.
- une couche filtrante colorée 9 est déposée sur la face F3 directement (de préférence) ou sur la couche fonctionnelle optionnelle 6'.
Par exemple la couche 4 et la couche filtrante 9 sont en émail.
Une alternative tout émail est possible côté face F4

La figure 2d représente une vue partielle en coupe longitudinale d'un pare-brise feuilleté comprenant une ou des signalétiques lumineuses internes selon la présente invention.
Le pare-brise feuilleté de véhicule 200c à signalétique lumineuse interne diffère du pare-brise 200b en ce que le support commun 7' (transparent) est face émetteur des dispositifs OLEDS 2a et 2b. Sa face arrière 71' (côté face F2) porte les dispositifs OLEDS 2a et 2b. Sa face avant 71' (côté face F3) porte les couches filtrantes colorées 9a et 9b. Alternativement, les couche filtrantes colorées 9a et 9b sont sur sa face arrière 71' (côté face F2).

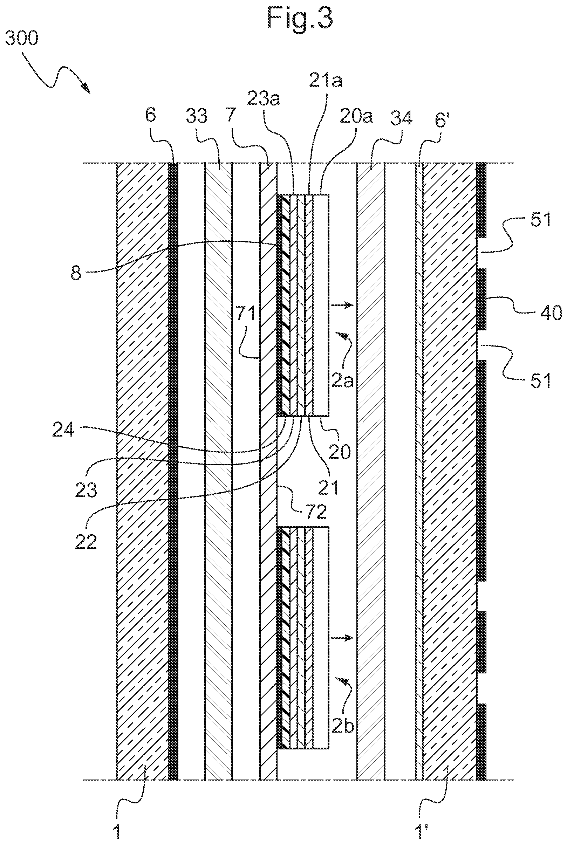

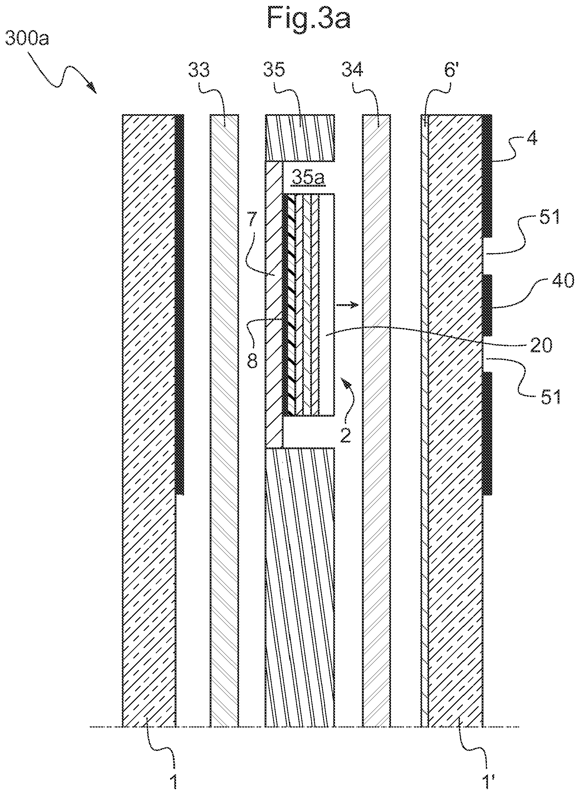

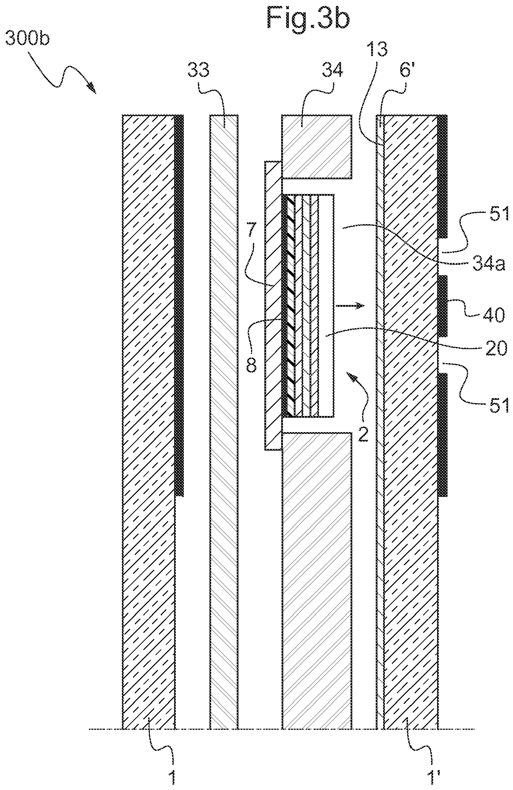

La figure 3 représente une vue partielle en éclaté en coupe longitudinale d'un pare-brise feuilleté comprenant une ou des signalétiques lumineuses internes selon la présente invention (par simplification les éléments ne sont pas dessinés bombés, courbés).
Les premiers et deuxième dispositifs OLED 2a et 2b sont choisis à émission par l'arrière et comportent chacun :
- un premier substrat transparent 20 courbé, par exemple plastique (PET etc) ou verre (trempé), porteur :
   - d'une électrode inférieure (la plus proche du substrat) 21, transparente par exemple ITO ou grille métallique (argent etc)
   - d'un premier système électroluminescent organique 22,
   - d'une électrode dite supérieure (la plus loin du substrat) 23, réfléchissante, par exemple aluminium ou argent
   - d'un vernis ou d'un film de protection 24, par exemple du kapton collé à l'électrode supérieure, éventuellement dépassant et avec des plages de contacts pour les électrode
Chaque dispositif est collé par une colle 8 ou un adhésif double face au support commun 7 plus en arrière. Les dispositifs OLED peuvent être contre la face 72 du support et liés juste par des points de soudure entre des contacts des électrodes et des conducteurs sur la face 72. Ces contacts peuvent être sur un même côté du dispositif OLED par exemple 21a et 23a.

La figure 3a représente une vue partielle en éclaté en coupe latérale d'un pare-brise feuilleté 300a comprenant une ou des signalétiques lumineuses internes selon la présente invention (par simplification les éléments ne sont pas dessinés bombés, courbés).
Elle illustre le feuilletage du premier dispositif OLED 2 à émission par l'arrière (ou optionnellement par l'avant ou le retournant) possible à partir de 3 feuillets de préférence de PVB
- deux feuillets externes 33 et 34 en contact avec F2 et F3
- -un feuillet central troué (avec un évidement 35a) sur le pourtour du support commun 7, sensiblement de même épaisseur que l'ensemble support et dispositif OLED
Le feuillet 33 peut être optionnel ;

La figure 3b représente une vue partielle en éclaté en coupe latérale d'un pare-brise feuilleté 300b comprenant une ou des signalétiques lumineuses internes selon la présente invention (par simplification les éléments ne sont pas dessinés bombés, courbés).
Elle illustre le feuilletage du premier dispositif OLED 2 à émission par l'arrière (ou optionnellement par l'avant ou le retournant) possible à partir de deux feuillets de préférence de PVB
- un feuillet externe 33 côté face F2
- un feuillet 34 troué (avec un évidement 34a) sur le pourtour du premier dispositif OLED et en (légère) surépaisseur par rapport à la face avant du substrat 20 ;
Le feuillet 33 peut être optionnel ;

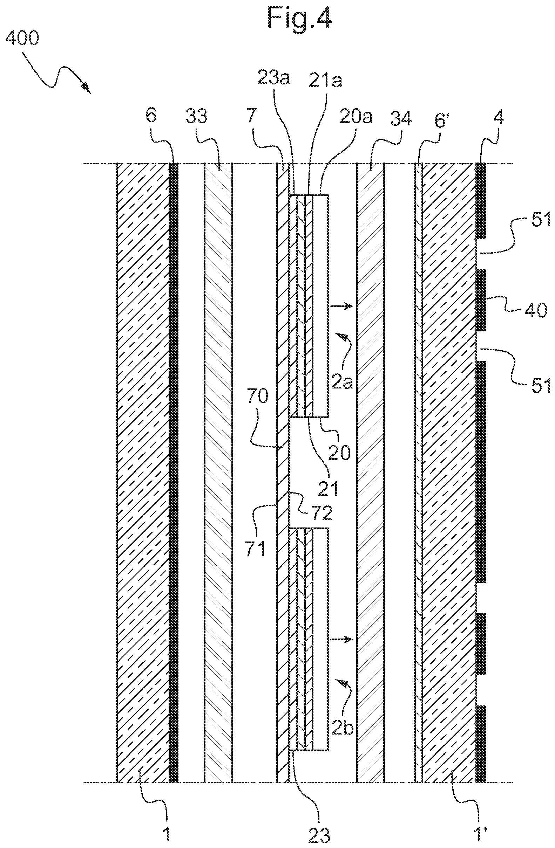

La figure 4 représente une vue partielle en éclaté en coupe longitudinale d'un pare-brise feuilleté 400 comprenant une ou des signalétiques lumineuses internes selon la présente invention (par simplification les éléments ne sont pas dessinés bombés, courbés).
Il diffère du pare-brise 300 en ce que le support 7 fait directement office de film de protection de l'électrode supérieure 23. Le support 7 peut être collé à l'électrode supérieure.

La figure 5 représente une vue partielle en éclaté en coupe longitudinale d'un pare-brise feuilleté comprenant une ou des signalétiques lumineuses internes selon la présente invention (par simplification les éléments ne sont pas dessinés bombés, courbés).
Il diffère du pare-brise 300 en ce que le support 7' est côté avant. Il est transparent comme un PET ou un verre. La face avant du substrat peut être collé à la face 71'
Les dispositifs OLED 2a et 2b peuvent être contre la face 71' du support 7' et liés juste par des points de soudure entre des contacts des électrodes et des conducteurs sur la face 71'. Ces contacts peuvent être sur un même côté du dispositif OLED par exemple coté 21a et 23a.

La figure 5' représente une vue partielle en éclaté en coupe latérale d'un pare-brise feuilleté 500' comprenant une ou des signalétiques lumineuses internes selon la présente invention (par simplification les éléments ne sont pas dessinés bombés, courbés).
Elle illustre le feuilletage du premier dispositif OLED 2 à émission par l'arrière (ou optionnellement par l'avant ou le retournant) possible à partir de 3 feuillets de préférence de PVB/
- deux feuillets externes 33 et 34 en contact avec F2 et F3
- -un feuillet central troué (avec un évidement 35a) sur le pourtour du support commun 7' coté avant sensiblement de même épaisseur que l'ensemble support 7' et dispositif OLED.
Le feuillet 34 peut être optionnel.

La figure 6 représente une vue partielle en éclaté en coupe longitudinale d'un pare-brise feuilleté 600 comprenant une ou des signalétiques lumineuses internes selon la présente invention (par simplification les éléments ne sont pas dessinés bombés, courbés).

Elle illustre le feuilletage du premier dispositif OLED 2 à émission par l'arrière (ou optionnellement par l'avant ou le retournant) possible à partir de 3 feuillets de préférence de PVB
- deux feuillets externes 33 et 34 en contact avec F2 et F3
- un feuillet central 35 troué (avec un évidement 35a) sur le pourtour de chaque dispositif OLED 2a et 2b (sans support commun) sensiblement de même épaisseur que le dispositif OLED.
Le feuillet 33 peut être optionnel.

La figure 6' représente une vue partielle en éclaté en coupe latérale d'un pare-brise feuilleté 600' comprenant une ou des signalétiques lumineuses internes selon la présente invention (par simplification les éléments ne sont pas dessinés bombés, courbés).

Elle illustre le feuilletage du premier dispositif OLED 2 à émission par l'arrière (ou optionnellement par l'avant ou le retournant) possible à partir de 2 feuillets de préférence de PVB
- un feuillet externe 33 en contact avec F2
- -un feuillet central 34 troué (avec un évidement 34a) sur le pourtour du dispositif OLED 2 (sans support commun), en surépaisseur par rapport à la face avant du substrat 20.
Le feuillet 33 peut être optionnel.

La figure 7 représente une vue partielle en coupe d'un pare-brise feuilleté 700 comprenant une ou des signalétiques lumineuses internes selon la présente invention (par simplification les éléments ne sont pas dessinés bombés, courbés).
Le dispositif OLED 2 peut avoir un substrat ou être sur un support (commun à d'autres dispositifs OLED) avec une partie 26 dépassant sur le bord du pare-brise, courbé et allant jusqu'à la face F4, en étant collé sur la face F4 par un adhésif 7a . La carrosserie est elle-même collé à cet endroit par un cordon de colle 7b.
Comme ici, on peut prévoir une encoche du verre interne 1' pour faciliter le repli vers la face F4 et gagner en compacité.
La distance D entre le bord (longitudinal) du vitrage et le bas de la première signalétique peut être d'au moins 5cm, 8cm, 10cm. La distance D entre le bord (longitudinal) du vitrage et le bas de la première signalétique peut être d'au plus 25cm même d'au plus 20cm.

La figure 8 représente une vue en perspective d'un support commun 7 porteur de deux dispositifs OLED 2a et 2b pour le rétroéclairage et porteurs des conducteurs d'amenée de courant, support commun 7 feuilleté dans le pare-brise et avec une partie coudée 73 sortant par la tranche 15.

La figure 9 représente une vue en perspective d'un support commun porteur de deux dispositifs OLED pour le rétroéclairage et porteurs des conducteurs d'amenée de courant de deux microcontrôleurs 10a et 10b, support commun 7 feuilleté dans le pare-brise et avec une partie coudée 73 sortant par la tranche 15.

## Revendications

1. Pare-brise feuilleté de véhicule, à signalétique lumineuse interne (100 à 700), comprenant:
- un premier vitrage (1), bombé, avec une première face principale (11) dite F1, notamment destinée à être côté extérieur du véhicule, et une deuxième face principale opposée (12) dite F2, d'épaisseur E1 de préférence d'au plus 2,5mm,-
- un deuxième vitrage (1'), bombé, avec une troisième face principale (13) dite F3 et une quatrième face principale opposée (14) dite F4, notamment destinée à être côté intérieur du véhicule, d'épaisseur E'1 de préférence d'au plus 2,2mm, l'un au moins des premier et deuxième vitrages étant en verre minéral
lesdites premier et deuxième vitrages étant reliés entre eux via les faces F2 et F3 par un intercalaire de feuilletage (3, 33, 34, 35) en une matière polymérique thermoformable et thermoplastique, intercalaire comportant une première face principale de collage côté face F2 (31) et une deuxième face principale de collage côté face F3 (32),
- une première couche périphérique dite de masquage intérieur (4) en matériau opaque, qui est entre la deuxième face de collage (32) et la face F3 (13) ou qui est sur la face F4 (14), ladite couche de masquage intérieur étant discontinue comprenant ainsi une ou des premières discontinuités (51), la ou les premières discontinuités forment une première signalétique (5), en signe(s) et/ou lettre(s),
- une deuxième couche périphérique dite de masquage extérieur (6) en matière opaque, entre la première face de collage (31) et la face F2 (12), en regard de la couche de masquage intérieur (4) et de la ou les premières discontinuités,
- une première source de rayonnement de la première signalétique,
**caractérisé en ce que** la première source de lumière comporte un premier dispositif à diode électroluminescente organique dit OLED (2) courbé, entre les faces F2 et F3, apte à émettre un premier rayonnement dans le spectre visible illuminant la première signalétique.

2. Pare-brise feuilleté de véhicule (100 à 700) selon la revendication précédente **caractérisé en ce que** la première signalétique est inscrite dans un rectangle de dimension verticale ou hauteur H centimétrique, et en définissant un angle α entre le pare-brise et l'axe de vision du conducteur, la première signalétique est **caractérisée par** une dimension verticale dite hauteur apparente H' et H est fixée par la formule *H* = *H*' /sin(*α*) ;

3. Pare-brise feuilleté de véhicule (100 à 700) selon l'une des revendications précédentes **caractérisé en ce qu'**il comporte un filtre de couleur entre le premier dispositif OLED notamment émettant dans le blanc et la première signalétique, sur la face F4 ou côté face F3, notamment le premier dispositif OLED étant à émission par l'arrière.

4. Pare-brise feuilleté de véhicule (100 à 700) selon la revendication précédente **caractérisé en ce que** le filtre de couleur comporte une couche filtrante colorée qui est côté F3 notamment en contact de la face F3 :
- sur la face F3
- ou sur le premier dispositif OLED notamment le premier dispositif OLED étant à émission par l'arrière
- ou sur un support commun, courbé, du premier dispositif OLED et d'un deuxième dispositif OLED apte à illuminer une deuxième signalétique, support transparent à l'avant du premier dispositif OLED notamment le premier dispositif OLED étant à émission par l'arrière.

5. Pare-brise feuilleté de véhicule (100 à 700) selon l'une des revendications précédentes **caractérisé en ce que** la couche de masquage intérieur est en face F3, la ou les premières ouvertures sont remplies par une couche transparente notamment en la matière thermoformable ou en une couche filtrante colorée.

6. Pare-brise feuilleté de véhicule selon l'une des revendications précédentes **caractérisé en ce qu'**une ou des deuxièmes discontinuités de la couche de masquage intérieur forment une deuxième signalétique, en signe(s) et/ou lettre(s), adjacente à la première signalétique, notamment espacée d'au moins 1cm et mieux d'au moins 2cm de la première signalétique, et **en ce qu'**un deuxième dispositif à diode électroluminescente organique dit OLED (2b) courbé, est entre les faces F2 et F3, deuxième dispositif OLED distinct du premier dispositif OLEDet étant apte à illuminer la deuxième signalétique, et notamment le premier dispositif OLED et le deuxième dispositif OLED étant à émission par l'arrière de préférence, les premier et deuxième dispositifs OLED sont sur un support commun (7) d'épaisseur E'2 avec E2+E'2 inférieur à E3, E2 étant l'épaisseur du premier dispositif OLED et E3 l'épaisseur de l'intercalaire de feuilletage et de préférence E'2 subcentimétrique, courbé, agencé côté avant donc côté émission de lumière, ou côté arrière.

7. Pare-brise feuilleté de véhicule selon la revendication précédente **caractérisé en ce que** le support commun est porteur de conducteurs électriques alimentant le premier dispositif OLED et le deuxième dispositif OLED, notamment le premier dispositif OLED et le deuxième dispositif OLED étant à émission par l'arrière et de préférence est porteur d'un ou de premiers composants électroniques incluant un premier microcontroleur adressant le premier dispositif OLED et régulant l'alimentation électrique du premier dispositif OLED et de préférence est porteur d'un ou de deuxièmes composants électroniques incluant un deuxième microcontroleur adressant le deuxième dispositif OLED et régulant l'alimentation électrique du deuxième dispositif OLED.

8. Pare-brise feuilleté de véhicule selon l'une des revendications précédentes **caractérisé en ce que** le premier dispositif OLED est couvert par une couche de protection, diélectrique éventuellement porteur de conducteurs électriques alimentant le premier dispositif OLED, éventuellement cette couche de protection dépassant d'un ou de bords du premier dispositif OLED et couvrant un deuxième dispositif OLED adjacent au premier dispositif OLED apte à illuminer une deuxième signalétique, notamment le premier dispositif OLED et même le deuxième dispositif OLED étant à émission par l'arrière.

9. Pare-brise feuilleté de véhicule selon l'une des revendications précédentes **caractérisé en ce que** le premier dispositif OLEDest monté sur la face F2 directement ou via un support commun avec un deuxième dispositif OLED adjacent au premier dispositif OLED apte à illuminer une deuxième signalétique, , notamment le premier dispositif OLED et même le deuxième dispositif OLED étant à émission par l'arrière éventuellement la première face principale de collage est trouée au droit du premier dispositif OLED voire même du deuxième dispositif OLED éventuel, notamment avec un surépaisseur de l'intercalaire de feuilletage par rapport au premier dispositif OLED laissant un espace de préférence de hauteur d'au plus 0,4mm ou d'au plus 0,3mm, et de préférence l'intercalaire de feuilletage couvre l'éventuel support commun ou **en ce que** le premier dispositif OLED est monté sur la face F3 directement ou via un support commun avec un deuxième dispositif OLED adjacent au premier dispositif OLED apte à illuminer une deuxième signalétique, éventuellement la deuxième face principale de collage est trouée au droit du premier dispositif OLED voire même du deuxième dispositif OLED éventuel notamment avec un surépaisseur de l'intercalaire de feuilletage par rapport au premier dispositif OLED laissant un espace de préférence de hauteur d'au plus 0,4mm ou d'au plus 0,3mm et de préférence l'intercalaire de feuilletage couvre l'éventuel support commun.

10. Pare-brise feuilleté de véhicule selon l'une des revendications précédentes **caractérisé en ce que** le premier dispositif OLED est encapsulé par la matière thermoformable.

11. Pare-brise feuilleté de véhicule selon l'une des revendications précédentes **caractérisé en ce que** la matière thermoformable comporte un butyral de polyvinyle (PVB).

12. Pare-brise feuilleté de véhicule selon l'une des revendications précédentes **caractérisé en ce que** la première signalétique est choisie parmi :
- une aide à la conduite de préférence sur le bord longitudinal inférieur
- un témoin d'état de fonctionnement de la voiture, de préférence sur le bord longitudinal inférieur, supérieur ou le bord latéral côté conducteur
- une information sur l'environnement extérieur: météo,... sur le bord longitudinal supérieur
- un témoin de connectivité au réseau de communication sur le bord latéral côté passager avant.

13. Pare-brise feuilleté de véhicule selon l'une des revendications précédentes **caractérisé en ce que** la couche de masquage intérieur et la couche de masquage extérieur sont constituées du même matériau de préférence en émail, en F2 et F3 ou en F2 et F4 et l'éventuelle couche filtrante colorée est en émail,

14. Pare-brise feuilleté de véhicule selon l'une des revendications précédentes **caractérisé en ce que** la couche de masquage intérieur est une bande de largeur L0 et dans la zone de la première signalétique de largeur L1>L0, notamment côté conducteur.

15. Pare-brise feuilleté de véhicule selon l'une des revendications précédentes **caractérisé en ce que** le premier dispositif OLED comporte un premier substrat et est à émission au travers le premier substrat et un éventuel deuxième dispositif OLED comporte un deuxième substrat adjacent ou identique au premier substrat, et est à émission au travers le deuxième substrat.

16. Pare-brise feuilleté de véhicule selon l'une des revendications précédentes **caractérisé en ce que** le premier dispositif OLED comporte un premier substrat transparent courbé,, comportant dans cet ordre côté face F2 :
- une électrode inférieure de préférence transparente
- un premier système électroluminescent organique
- une électrode supérieure de préférence réfléchissante, notamment métallique,
et **en ce que** le pare-brise comporte éventuellement un deuxième dispositif OLED, entre les faces F2 et F3, qui comporte un deuxième substrat transparent courbé,, adjacent au premier dispositif OLED, apte à illuminer une deuxième signalétique, et comportant côté face F2 dans cet ordre :
- une électrode inférieure de préférence transparente
- un deuxième système électroluminescent organique
- une électrode supérieure de préférence réfléchissante, notamment métallique.

## Patentansprüche

1. Verbundglas-Fahrzeugwindschutzscheibe mit innerer leuchtender Anzeige (100 bis 700), umfassend:
- eine erste gebogene Verglasung (1) mit einer ersten Hauptfläche (11), F1 genannt, die insbesondere dazu bestimmt ist, sich auf der Fahrzeugaußenseite zu befinden, und einer gegenüberliegenden zweiten Hauptfläche (12), F2 genannt, mit einer Dicke E1 von bevorzugt höchstens 2,5 mm,
- eine zweite gebogene Verglasung (1') mit einer dritten Hauptfläche (13), F3 genannt, und einer gegenüberliegenden vierten Hauptfläche (14), F4 genannt, die insbesondere dazu bestimmt ist, sich auf der Fahrzeuginnenseite zu befinden, mit einer Dicke E'1 von bevorzugt höchstens 2,2 mm, wobei mindestens eine von der ersten und der zweiten Verglasung aus Mineralglas besteht,
wobei die erste und die zweite Verglasung über die Flächen F2 und F3 miteinander verbunden sind, und zwar mittels einer Verbund-Zwischenlage (3, 33, 34, 35) aus einem warmformbaren und thermoplastischen Polymermaterial , wobei die Zwischenlage F2-seitig eine erste Hauptklebefläche (31) und F3-seitig eine zweite Hauptklebefläche (32) aufweist,
- eine erste Randschicht, innere Maskierungsschicht (4) genannt, aus undurchsichtigem Material, die sich zwischen der zweiten Klebefläche (32) und der Fläche F3 (13) befindet oder die sich auf der Fläche F4 (14) befindet, wobei die innere Maskierungsschicht diskontinuierlich ist und somit eine oder mehrere erste Diskontinuitäten (51) aufweist, wobei die erste oder die ersten Diskontinuitäten eine erste Anzeige (5) in Symbol- und/oder Buchstabenform bilden,
- eine zweite Randschicht, äußere Maskierungsschicht (6) genannt, aus undurchsichtigem Material zwischen der ersten Klebefläche (31) und der Fläche F2 (12) gegenüber der inneren Maskierungsschicht (4) und der oder den ersten Diskontinuitäten,
- eine erste Strahlungsquelle der ersten Anzeige,
**dadurch gekennzeichnet, dass** die erste Lichtquelle eine erste gebogene organische Elektrolumineszenzdiodenvorrichtung, OLED-Vorrichtung (2) genannt, zwischen den Flächen F2 und F3 umfasst, die geeignet ist, eine erste Strahlung im sichtbaren Spektrum zu emittieren, welche die erste Anzeige beleuchtet.

2. Verbundglas-Fahrzeugwindschutzscheibe (100 bis 700) nach dem vorhergehenden Anspruch, **dadurch gekennzeichnet, dass** die erste Anzeige in ein Rechteck mit einem vertikalen Maß oder einer Höhe H im Zentimeterbereich unter Bildung eines Winkels α zwischen der Windschutzscheibe und der Blickachse des Fahrers eingeschrieben ist, wobei die erste Anzeige durch ein vertikales Maß, scheinbare Höhe H' genannt, gekennzeichnet ist und H durch die Formel *H* = *H*'/sin(α) festgelegt ist.

3. Verbundglas-Fahrzeugwindschutzscheibe (100 bis 700) nach einem der vorhergehenden Ansprüche, **dadurch gekennzeichnet, dass** sie einen Farbfilter zwischen der ersten OLED-Vorrichtung, die insbesondere in Weiß abstrahlend ist, und der ersten Anzeige auf der Fläche F4 oder F3-seitig aufweist, wobei die erste OLED-Vorrichtung insbesondere bottom-emittierend ist.

4. Verbundglas-Fahrzeugwindschutzscheibe (100 bis 700) nach dem vorhergehenden Anspruch, **dadurch gekennzeichnet, dass** der Farbfilter eine farbige Filterschicht umfasst, die F3-seitig ist, insbesondere in Kontakt mit der Fläche F3:
- auf der Fläche F3
- oder auf der ersten OLED-Vorrichtung, wobei insbesondere die erste OLED-Vorrichtung bottom-emittierend ist,
- oder auf einem gebogenen gemeinsamen Träger der ersten OLED-Vorrichtung und einer zweiten OLED-Vorrichtung, die geeignet ist, eine zweite Anzeige zu beleuchten, wobei der transparente Träger sich vor der ersten OLED-Vorrichtung befindet, wobei die erste OLED-Vorrichtung insbesondere bottom-emittierend ist.

5. Verbundglas-Fahrzeugwindschutzscheibe (100 bis 700) nach einem der vorhergehenden Ansprüche, **dadurch gekennzeichnet, dass** die innere Maskierungsschicht auf der Fläche F3 liegt, wobei die erste Öffnung oder die ersten Öffnungen mit einer transparenten Schicht verfüllt sind, insbesondere aus dem warmformbarem Material oder aus einer farbigen Filterschicht.

6. Verbundglas-Fahrzeugwindschutzscheibe nach einem der vorhergehenden Ansprüche, **dadurch gekennzeichnet, dass** eine oder mehrere zweite Diskontinuitäten der inneren Maskierungsschicht eine zweite Anzeige in Symbol- und/oder Buchstabenform bilden, die benachbart zur ersten Anzeige ist, insbesondere mindestens 1 cm und besser mindestens 2 cm von der ersten Anzeige beabstandet ist, und dadurch, dass sich eine zweite gebogene organische Elektrolumineszenzdiodenvorrichtung, OLED-Vorrichtung (2b) genannt, zwischen den Flächen F2 und F3 befindet, wobei die zweite OLED-Vorrichtung von der ersten OLED-Vorrichtung verschieden ist und geeignet ist, die zweite Anzeige zu beleuchten, und die erste OLED-Vorrichtung und die zweite OLED-Vorrichtung insbesondere bevorzugt bottom-emittierend sind, wobei die erste und die zweite OLED-Vorrichtung auf einem gebogenen gemeinsamen Träger (7) mit einer Dicke E'2 sind, mit E2+E'2 kleiner als E3, wobei E2 die Dicke der ersten OLED-Vorrichtung und E3 die Dicke der Verbund-Zwischenlage ist und E'2 bevorzugt im Subzentimeterbereich liegt, und der Träger auf der Vorderseite und somit der Lichtemissionsseite oder auf der Rückseite angeordnet ist.

7. Verbundglas-Fahrzeugwindschutzscheibe nach dem vorhergehenden Anspruch, **dadurch gekennzeichnet, dass** der gemeinsame Träger elektrische Leiter trägt, welche die erste OLED-Vorrichtung und die zweite OLED-Vorrichtung versorgen, wobei die erste OLED-Vorrichtung und die zweite OLED-Vorrichtung insbesondere bottom-emittierend sind, und bevorzugt ein oder mehrere erste elektronische Bauelemente trägt, darunter einen ersten Mikrocontroller, der die erste OLED-Vorrichtung ansteuert und die Stromversorgung der ersten OLED-Vorrichtung regelt, und bevorzugt ein oder mehrere zweite elektronische Bauelemente trägt, darunter einen zweiten Mikrocontroller, der die zweite OLED-Vorrichtung ansteuert und die Stromversorgung der zweiten OLED-Vorrichtung regelt.

8. Verbundglas-Fahrzeugwindschutzscheibe nach einem der vorhergehenden Ansprüche, **dadurch gekennzeichnet, dass** die erste OLED-Vorrichtung mit einer dielektrischen Schutzschicht überzogen ist, die optional elektrische Leiter trägt, welche die erste OLED-Vorrichtung versorgen, wobei diese Schutzschicht optional eine oder mehrere Kanten der ersten OLED-Vorrichtung überragt und eine zur ersten OLED-Vorrichtung benachbarte zweite OLED-Vorrichtung bedeckt, die geeignet ist, eine zweite Anzeige zu beleuchten, wobei insbesondere die erste OLED-Vorrichtung und auch die zweite OLED-Vorrichtung bottom-emittierend sind.

9. Verbundglas-Fahrzeugwindschutzscheibe nach einem der vorhergehenden Ansprüche, **dadurch gekennzeichnet, dass** die erste OLED-Vorrichtung auf der Fläche F2 direkt oder über einen Träger gemeinsam mit einer zur ersten OLED-Vorrichtung benachbarten zweiten OLED-Vorrichtung montiert ist, die geeignet ist, eine zweite Anzeige zu beleuchten, wobei insbesondere die erste OLED-Vorrichtung und auch die zweite OLED-Vorrichtung bottom-emittierend sind, wobei optional die erste Hauptklebefläche direkt vor der ersten OLED-Vorrichtung oder auch der zweiten OLED-Vorrichtung durchlocht ist, insbesondere bei einer Überdicke der Verbund-Zwischenlage in Bezug auf die erste OLED-Vorrichtung, die einen Raum mit einer Höhe von bevorzugt höchstens 0,4 mm oder höchstens 0,3 mm lässt, und die Verbund-Zwischenlage bevorzugt den etwaigen gemeinsamen Träger bedeckt, oder dadurch, dass die erste OLED-Vorrichtung auf der Fläche F3 direkt oder über einen Träger gemeinsam mit einer zur ersten OLED-Vorrichtung benachbarten zweiten OLED-Vorrichtung montiert ist, die geeignet ist, eine zweite Anzeige zu beleuchten, wobei optional die zweite Hauptklebefläche direkt vor der ersten OLED-Vorrichtung oder auch der optionalen zweiten OLED-Vorrichtung durchlocht ist, insbesondere bei einer Überdicke der Verbund-Zwischenlage in Bezug auf die erste OLED-Vorrichtung, die einen Raum mit einer Höhe von bevorzugt höchstens 0,4 mm oder höchstens 0,3 mm lässt, und die Verbund-Zwischenlage bevorzugt den optionalen gemeinsamen Träger bedeckt.

10. Verbundglas-Fahrzeugwindschutzscheibe nach einem der vorhergehenden Ansprüche, **dadurch gekennzeichnet, dass** die erste OLED-Vorrichtung durch das warmformbare Material eingekapselt ist.

11. Verbundglas-Fahrzeugwindschutzscheibe nach einem der vorhergehenden Ansprüche, **dadurch gekennzeichnet, dass** das warmformbare Material ein Polyvinylbutyral (PVB) umfasst.

12. Verbundglas-Fahrzeugwindschutzscheibe nach einem der vorhergehenden Ansprüche, **dadurch gekennzeichnet, dass** die erste Anzeige ausgewählt ist aus:
- einer Fahrassistenz, bevorzugt an der unteren Längskante,
- einer Fahrzeugbetriebszustandsanzeige, bevorzugt an der unteren Längskante, der oberen Längskante oder der fahrerseitigen Seitenkante,
- einer Information zur Außenumgebung: Wetter usw. an der oberen Längskante,
- einer Kontrollanzeige für die Verbindung mit dem Kommunikationsnetz an der beifahrerseitigen Seitenkante.

13. Verbundglas-Fahrzeugwindschutzscheibe nach einem der vorhergehenden Ansprüche, **dadurch gekennzeichnet, dass** die innere Maskierungsschicht und die äußere Maskierungsschicht an F2 und F3 oder an F2 und F4 aus dem gleichen Material bestehen, bevorzugt aus Email, und die optionale farbige Filterschicht aus Email ist.

14. Verbundglas-Fahrzeugwindschutzscheibe nach einem der vorhergehenden Ansprüche, **dadurch gekennzeichnet, dass** die innere Maskierungsschicht ein Streifen mit der Breite L0 und im Bereich der ersten Anzeige mit der Breite L1 > L0 ist, insbesondere fahrerseitig.

15. Verbundglas-Fahrzeugwindschutzscheibe nach einem der vorhergehenden Ansprüche, **dadurch gekennzeichnet, dass** die erste OLED-Vorrichtung ein erstes Substrat aufweist und durch das erste Substrat hindurch emittiert und eine etwaige zweite OLED-Vorrichtung ein zweites Substrat aufweist, das benachbart zu oder identisch mit dem ersten Substrat ist, und durch das zweite Substrat hindurch emittiert.

16. Verbundglas-Fahrzeugwindschutzscheibe nach einem der vorhergehenden Ansprüche, **dadurch gekennzeichnet, dass** die erste OLED-Vorrichtung ein erstes gebogenes transparentes Substrat aufweist, das F2-seitig in dieser Reihenfolge aufweist:
- eine bevorzugt transparente untere Elektrode,
- ein erstes organisches elektrolumineszentes System,
- eine bevorzugt reflektierende, insbesondere metallische obere Elektrode,
und dadurch, dass die Windschutzscheibe optional zwischen den Flächen F2 und F3 benachbart zur ersten OLED-Vorrichtung eine zweite OLED-Vorrichtung aufweist, die ein zweites gebogenes transparentes Substrat aufweist und geeignet ist, eine zweite Anzeige zu beleuchten, und F2-seitig in dieser Reihenfolge aufweist:
- eine bevorzugt transparente untere Elektrode,
- ein zweites organisches elektrolumineszentes System,
- eine bevorzugt reflektierende, insbesondere metallische obere Elektrode.

## Claims

1. A laminated vehicle windshield (100 to 700) including one or more internal luminous signs, comprising:
- a first curved glazing (1) with a first main face (11) called F1, which face is in particular intended to be exterior side of the vehicle, and an opposite second main face (12) called F2, of thickness E1 of preferably at most 2.5 mm;
- a second curved glazing (1') with a third main face (13) called F3 and an opposite fourth main face (14) called F4, which face is in particular intended to be interior side of the vehicle, of thickness E'1 of preferably at most 2.2 mm, at least one of the first and second glazings being made of mineral glass
said first and second glazings being connected together via the faces F2 and F3 by a lamination interlayer (3, 33, 34, 35) made of a thermoformable and thermoplastic polymeric material, said interlayer including a first bonding main face (31), face F2 side and a second bonding main face (32), face F3 side;
- a first peripheral layer called the interior masking layer (4) made of opaque material, which is between the second bonding face (32) and the face F3 (13) or that is on face F4 (14), said interior masking layer being discontinuous and thus comprising one or more first discontinuities (51), the one or more first discontinuities form a first sign (5), made up of one or more symbols and/or letters;
- a second peripheral layer called the exterior masking layer (6) made of opaque material, between the first bonding face (31) and the face F2 (12), facing the interior masking layer (4) and the one or more first discontinuities; and
- a first radiation source for the first sign,
**characterized in that** the first light source includes a first curved organic-light-emitting-diode device called an OLED device (2) between the faces F2 and F3, able to emit a first emission in the visible spectrum, illuminating the first sign.

2. The laminated vehicle windshield (100 to 700) as claimed in the preceding claim, **characterized in that** the first sign is inscribed in a rectangle of centimeter-sized vertical dimension or height H and such as to define an angle α between the windshield and the gaze axis of the driver, the first sign is **characterized by** a vertical dimension called the apparent height H' and H is set by the formula *H* = *H'*/sin(*α*).

3. The laminated vehicle windshield (100 to 700) as claimed in either of the preceding claims, **characterized in that** it includes a color filter between the in particular white-emitting first OLED device and the first sign on face F4 or face F3 side, in particular the bottom-emitting first OLED device.

4. The laminated vehicle windshield (100 to 700) as claimed in the preceding claim **characterized in that** the color filter includes a colored filtering layer that is F3 side in particular making contact with the face F3:
- on the face F3;
- or on the first OLED device, the first OLED device in particular being a bottom-emitting device; - or on a curved carrier that is common to the first OLED device and to a second OLED device able to illuminate a second sign, said carrier being transparent in front of the first OLED device, the first OLED device in particular being a bottom-emitting device.

5. The laminated vehicle windshield (100 to 700) as claimed in one of the preceding claims, **characterized in that** the interior masking layer is on face F3, and the one or more first apertures are filled with a transparent layer in particular made of the thermoformable material or with a colored filtering layer.

6. The laminated vehicle windshield as claimed in one of the preceding claims, **characterized in that** one or more second discontinuities of the interior masking layer form a second sign, made up of one or more symbols and/or letters, which sign is adjacent to the first sign and in particular spaced apart by at least 1 cm and better still at least 2 cm from the first sign, and **in that** a second curved organic-light-emitting-diode device called an OLED device (2b) is between the faces F2 and F3, said second OLED device being distinct from the first OLED device and being able to illuminate the second sign, the first OLED device and the second OLED device in particular being bottom-emitting devices, and the first and second OLED devices are preferably on a curved common carrier (7) of thickness E'2, with E2 + E'2 smaller than E3, E2 being the thickness of the first OLED device, and E3 is the thickness of the lamination interlayer and E'2 is preferably subcentimeter sized, said carrier being arranged top side and therefore light emission side, or bottom side.

7. The laminated vehicle windshield as claimed in the preceding claim, **characterized in that** the common carrier bears electrical conductors supplying power to the first OLED device and to the second OLED device, the first OLED device and the second OLED device in particular being bottom-emitting devices, and preferably bears one or more first electronic components including a first microcontroller addressing the first OLED device and regulating the electrical power supply of the first OLED device and preferably bears one or more second electronic components including a second microcontroller addressing the second OLED device and regulating the electrical power supply of the second OLED device.

8. The laminated vehicle windshield as claimed in one of the preceding claims, **characterized in that** the first OLED device is covered by a dielectric protective layer that optionally bears electrical conductors that supply the first OLED device with power, this protective layer optionally extending beyond one or more edges of the first OLED device and covering a second OLED device that is adjacent to the first OLED device and that is able to illuminate a second sign, the first OLED device and even the second OLED device in particular being bottom-emitting devices.

9. The laminated vehicle windshield as claimed in one of the preceding claims, **characterized in that** the first OLED device is mounted on face F2 directly or via a carrier that is common to a second OLED device that is adjacent to the first OLED device and that is able to illuminate a second sign, the first OLED device and even the second OLED device in particular being bottom-emitting devices, the first bonding main face optionally being apertured plumb with the first OLED device and indeed even plumb with the optional second OLED device, with in particular an excess thickness of lamination interlayer with respect to the first OLED device leaving a space preferably of height of at most 0.4 mm or of at most 0.3 mm, the lamination interlayer preferably covering the optional common carrier, or **in that** the first OLED device is mounted on face F3 directly or via a carrier that is common to a second OLED device that is adjacent to the first OLED device and that is able to illuminate a second sign, the second bonding main face optionally being apertured plumb with the first OLED device and indeed even plumb with the optional second OLED device in particular with an excess thickness of lamination interlayer with respect to the first OLED device leaving a space preferably of height of at most 0.4 mm or of at most 0.3 mm, the lamination interlayer preferably covering the optional common carrier.

10. The laminated vehicle windshield as claimed in one of the preceding claims, **characterized in that** the first OLED device is encapsulated by the thermoformable material.

11. The laminated vehicle windshield as claimed in one of the preceding claims, **characterized in that** the thermoformable material includes polyvinyl butyral (PVB).

12. The laminated vehicle windshield as claimed in one of the preceding claims, **characterized in that** the first sign is chosen from:
- a driver aid preferably on the lower longitudinal edge;
- a status indicator indicating an operating state of the automobile, preferably on the lower longitudinal edge, upper longitudinal edge or driver side lateral edge;
- information on the external environment: weather, etc. on the upper longitudinal edge; and
- an indicator indicating connectivity to a communications network on the front passenger side lateral edge.

13. The laminated vehicle windshield as claimed in one of the preceding claims, **characterized in that** the interior masking layer and the exterior masking layer are made of the same material and preferably of enamel, are on F2 and F3 or on F2 and F4 and the optional colored filtering layer is made of enamel.

14. The laminated vehicle windshield as claimed in one of the preceding claims, **characterized in that** the interior masking layer is in particular a driver side strip of width L0 and in the zone of the first sign of width L1>L0.

15. The laminated vehicle windshield as claimed in one of the preceding claims, **characterized in that** the first OLED device includes a first substrate and emits through the first substrate and an optional second OLED device includes a second substrate that is adjacent or identical to the first substrate, and that emits through the second substrate.

16. The laminated vehicle windshield as claimed in one of the preceding claims, **characterized in that** the first OLED device includes a first curved transparent substrate including face F2 side in this order:
- a preferably transparent lower electrode;
- a first organic light-emitting system; and
- a preferably reflective upper electrode that is in particular metal;
and **in that** the windshield optionally includes a second OLED device, between the faces F2 and F3, which includes a second curved transparent substrate, adjacent to the first OLED device and able to illuminate a second sign, and including F2 face side in this order:
- a preferably transparent lower electrode;
- a second organic light-emitting system; and
- a preferably reflective upper electrode that is in particular metal.
